(19) Europäisches Patentamt
European Patent Office
Office européen des brevets

(11) EP 3 151 314 B1

(12) **EUROPEAN PATENT SPECIFICATION**

(45) Date of publication and mention of the grant of the patent:
**01.08.2018 Bulletin 2018/31**

(21) Application number: **16190772.0**

(22) Date of filing: **27.09.2016**

(51) Int Cl.:
***H01M 4/38*** *(2006.01)* ***H01M 10/052*** *(2010.01)*
***H01M 10/0567*** *(2010.01)* ***H01M 10/0569*** *(2010.01)*

# (54) LITHIUM METAL BATTERY

LITHIUMMETALL-BATTERIE

BATTERIE AU LITHIUM MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2015 KR 20150138618**

(43) Date of publication of application:
**05.04.2017 Bulletin 2017/14**

(73) Proprietors:
- **Samsung Electronics Co., Ltd.**
**Suwon-si, Gyeonggi-do 16677 (KR)**
- **Samsung SDI Co., Ltd.**
**Giheung-gu**
**Yongin-si, Gyeonggi-do (KR)**

(72) Inventors:
- **KIM, Jusik**
**16678 Gyeonggi-do (KR)**
- **KIM, Hyunseok**
**16678 Gyeonggi-do (KR)**
- **RYU, Saebom**
**16678 Gyeonggi-do (KR)**
- **PARK, Joungwon**
**16678 Gyeonggi-do (KR)**
- **KANG, Hyorang**
**16678 Gyeonggi-do (KR)**
- **PARK, Dahye**
**16678 Gyeonggi-do (KR)**
- **CHANG, Wonseok**
**16678 Gyeonggi-do (KR)**

(74) Representative: **Scheuermann, Erik et al**
**Elkington and Fife LLP**
**Prospect House**
**8 Pembroke Road**
**Sevenoaks, Kent TN13 1XR (GB)**

(56) References cited:
**WO-A1-2012/145796**
**WO-A1-2014/133466**
**WO-A2-2015/065539**
**JP-A- S63 121 270**
**JP-A- 2005 229 103**
**JP-A- 2011 100 777**
**US-A1- 2006 210 873**
**US-A1- 2007 243 463**
**US-A1- 2009 286 163**
**US-A1- 2013 092 866**
**US-A1- 2013 236 764**

- **J.A. VEGA ET AL: "Electrochemical Comparison and Deposition of Lithium and Potassium from Phosphonium- and Ammonium-TFSI Ionic Liquids", JOURNAL OF THE ELECTROCHEMICAL SOCIETY, vol. 156, no. 4, 30 January 2009 (2009-01-30), pages A253-A259, XP007908479, ISSN: 0013-4651, DOI: 10.1149/1.3070657 [retrieved on 2009-03-13]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 151 314 B1

**Description**

FIELD OF THE INVENTION

The present disclosure relates to a lithium metal battery including a negative electrode.

BACKGROUND OF THE INVENTION

A lithium secondary battery is a high performance secondary battery having the highest energy density among the common secondary batteries, and thus may be utilized in various fields such as electrical vehicles.

An example of the negative electrode of the lithium secondary battery may be a lithium electrode. A lithium electrode has a high electric capacity per unit weight, and thus the battery including the lithium electrode can also have a high capacity. However, the lithium secondary battery or a lithium metal battery including the lithium electrode as a negative electrode conventionally uses a liquid electrolyte such as a carbonate electrolyte or an ether electrolyte having a low viscosity. Also, the liquid electrolyte forms a porous lithium deposition layer on a lithium metal interface, and a side reaction between the electrolyte and the lithium metal may occur due to high reactivity of the electrolyte during a charging/discharging process. A highly porous lithium deposition layer formed on a lithium metal surface reduces an energy density during charging of a battery and may decrease lifespan of the lithium metal battery. Thus, there remains a need for a lithium battery having improved cell performance.

WO 2014/133466 A1, WO 2015/065539 A2, US 2013/236764 A1, WO 2012/145796 A1,

US 2009/286163 A1, JP 2005 229103 A and US 2007/243463 A1 all disclose non-aqueous electrolyte compositions for lithium metal batteries comprising a lithium salt dissolved in a mixture of a pyrrolidinium-based ionic liquid as a main solvent, with an organic co-solvent such as a hydrofluoroether, a bridging ether compound or a carbonate-based solvent.

US 2006/210873 A1 describes pyrrolidinium-based ionic liquids and their phosphorus and arsenic analogs, as well as the use thereof as (single) electrolyte solvent in energy storage devices, such as lithium secondary batteries.

US 2013/092866 A1 discloses (cyclic) phosphonium-based ionic liquids and the use thereof as electrolytes in energy storage devices such as batteries.

SUMMARY OF THE INVENTION

Provided is a lithium metal battery having an improved energy density and improved lifespan characteristics by increasing a density of a lithium deposition layer on a lithium negative electrode surface.

Additional aspects will be set forth in part in the description which follows and, in part, will be apparent from the description, or may be learned by practice of the presented exemplary embodiments.

According to an aspect of an exemplary embodiment, a lithium metal battery includes:

a lithium metal negative electrode;
a positive electrode; and
a liquid electrolyte disposed between the lithium metal negative electrode and the positive electrode, wherein the liquid electrolyte includes an ionic liquid including a cation that is represented by Formula 1 and an anion, and an organic solvent:

Formula 1

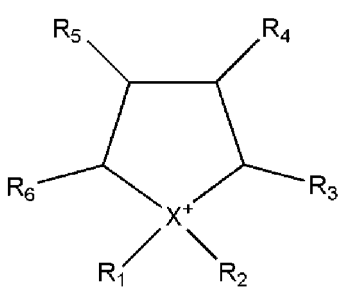

wherein in Formula 1,

X is N, P, or As;

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ has 4 or more carbon atoms; and

$R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30 alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30 heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a substituted or unsubstituted C2-C30 heterocyclic group, or a substituted or unsubstituted C3-C30 heterocyclic alkyl group, a substituted or unsubstituted C2-C30 heterocyclicoxy group, or a substituted or unsubstituted C3-C30 heterocyclicoxyalkyl group, wherein the amount of the cation of the ionic liquid is from greater than 0 part by weight to 3 parts by weight, based on 100 parts by weight of the organic solvent.

Also disclosed is a method of manufacturing a lithium metal battery, the method including:

providing a positive electrode having a positive active material disposed thereon;
providing a lithium metal negative electrode;
disposing a separator between the positive electrode and the lithium metal negative electrode;
disposing the positive electrode, the separator, and the negative electrode in a battery case; and
adding a liquid electrolyte to the cell case such that it contacts the positive electrode, the lithium metal negative electrode, and a separator to manufacture the lithium metal battery,
wherein the liquid electrolyte includes
an ionic liquid including a cation represented by Formula 1 and an anion, and
an organic solvent:

Formula 1

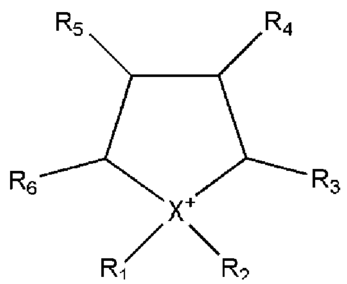

wherein in Formula 1,

X is N, P, or As;

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ includes 4 or more carbon atoms; and

$R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30 alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30 heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a

substituted or unsubstituted C2-C30 heterocyclic group, or a substituted or unsubstituted C3-C30 heterocyclicalkyl group, a substituted or unsubstituted C2-C30 heterocyclicoxy group, or a substituted or unsubstituted C3-C30 heterocyclicoxyalkyl group, wherein the amount of the cation of the ionic liquid is from greater than 0 part by weight to 3 parts by weight, based on 100 parts by weight of the organic solvent.

## BRIEF DESCRIPTION OF THE DRAWINGS

These and/or other aspects will become apparent and more readily appreciated from the following description of the exemplary embodiments, taken in conjunction with the accompanying drawings in which:

FIG. 1 is a schematic view of a lithium metal battery according to an exemplary embodiment;
FIG. 2 a graph of relative intensity (arbitrary units, a. u.) versus retention time (minutes, min) showing the results of a gel permeation chromatography (GPC) analysis performed on liquid electrolytes of Preparation Example 2 and Comparative Preparation Examples 1 and 5;
FIG. 3 is a scanning electron microscope (SEM) image of a cross-sectional view of a lithium deposition layer of a test cell using a liquid electrolyte prepared in Comparative Preparation Example 1;
FIG. 4 is an SEM image of a cross-sectional view of a lithium deposition layer of a test cell using a liquid electrolyte prepared in Preparation Example 2;
FIGS. 5A and 5B are SEM images of a deposition layer prepared in Comparative Example 1;
FIGS. 6A and 6B are SEM images of a deposition layer prepared in Example 2;
FIG. 7 is a graph of capacity (milliampere hours per gram, mAh/g) versus cycle number (number) illustrating a change in discharging characteristics per cycle of lithium metal batteries prepared in Examples 1 and 2 and Comparative Examples 1, 2, 3, and 5;
FIG. 8 is a graph of imaginary impedance, -Z" (Ohm square centimeters, $\Omega cm^2$) versus real impedance, Z' (Ohm square centimeters, $\Omega cm^2$) showing the results of impedance analysis of a lithium metal battery prepared in Comparative Example 1;
FIG. 9 is a graph of imaginary impedance, -Z" (Ohm square centimeters, $\Omega cm^2$) versus real impedance, Z' (Ohm square centimeters, $\Omega cm^2$) showing the results of impedance analysis of a lithium metal battery prepared in Example 2;
FIG. 10 is a graph of capacity (milliampere hours per gram, mAh/g) versus cycle number (number) illustrating a change in a discharge capacity per cycle of lithium metal batteries prepared in Comparative Examples 1 and 7 and Examples 2 and 3; and
FIG. 11 is a graph of imaginary impedance, -Z" (Ohm square centimeters, $\Omega cm^2$) versus real impedance, Z' (Ohm square centimeters, $\Omega cm^2$) showing the results of impedance analysis of lithium metal batteries prepared in Comparative Examples 1 and 7 and Example 2.

## DETAILED DESCRIPTION OF THE EMBODIMENTS

Reference will now be made in detail to exemplary embodiments of a lithium metal battery, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present disclosure. As used herein, the term "and/or" includes any and all combinations of one or more of the associated listed items. Expressions such as "at least one of," when preceding a list of elements, modify the entire list of elements and do not modify the individual elements of the list.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing

from the teachings of the present embodiments.

The terminology used herein is for the purpose of describing particular embodiments only and is not intended to be limiting. As used herein, the singular forms "a," "an," and "the" are intended to include the plural forms as well, unless the context clearly indicates otherwise.

The term "or" means "and/or." As used herein, the terms such as "comprising", "including", "having", or the like are intended to indicate the existence of the features regions, integers, steps, operations, components, and/or elements disclosed in the specification, and are not intended to preclude the possibility that one or more other features or elements may exist or may be added.

It will also be understood that when an element such as a layer, a region or a component is referred to as being "on" another layer or element, it can be directly on the other layer or element, or intervening layers, regions, or components may also be present. In contrast, when an element is referred to as being "directly on" another element, there are no intervening elements present.

In the drawings, the sizes of elements are exaggerated or reduced for ease of description. The size or thickness of each element shown in the drawings are arbitrarily illustrated for better understanding or ease of description, and thus the present disclosure is not limited thereto.

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Hereinafter, with reference to attached drawings, an electrolyte for a secondary battery, a method of preparing the electrolyte, and a secondary battery including the electrolyte according to an exemplary embodiment will be described in detail. However, these are for illustrative purposes only and are not intended to limit the scope of this disclosure.

According to an exemplary embodiment, a lithium metal battery comprises:

a lithium metal negative electrode;
a positive electrode; and
a liquid electrolyte that is disposed between the lithium metal negative electrode and the positive electrode,
wherein the liquid electrolyte includes an ionic liquid and an organic solvent, and wherein the ionic liquid includes a cation represented by Formula 1 and an anion:

Formula 1

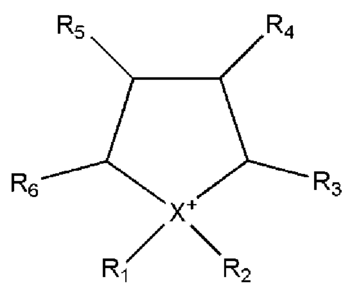

.

In Formula 1,

X is N, P, or As,

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ comprises 4 or more carbon atoms; and

$R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30

alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30 heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a substituted or unsubstituted C2-C30 heterocyclic group, or a substituted or unsubstituted C3-C30 heterocyclic alkyl group, a substituted or unsubstituted C2-C30 heterocyclicoxy group, or a substituted or unsubstituted C3-C30 heterocyclicoxyalkyl group, wherein the amount of the cation of the ionic liquid is from greater than 0 part by weight to 3 parts by weight, based on 100 parts by weight of the organic solvent.

In general, when an ionic liquid is added to a liquid electrolyte, the ionic liquid may be used either alone as a single electrolyte or as a mixture with a carbonate electrolyte solution in a liquid phase in an amount of about 30 percent by volume (vol%) or greater to increase flame retardancy.

Also, the effects of the ionic liquid on a density of a lithium deposition layer in a lithium metal negative electrode according to a cation chain structure have not been verified. Further, when the ionic liquid has the composition described above, electrochemical safety issues may occur at a lithium metal negative electrode interface at a high voltage or a high current density. This may result in deterioration of energy density and performance of the lithium metal battery, and the cell may not be stable due to thickness expansion at a side of the lithium metal negative electrode.

On the contrary, the lithium metal battery according to an embodiment includes an ionic liquid having a pyrrolidinium cation having a substituent group with a non-polar chain structure including 4 or more carbon atoms as shown in Formula 1 in a liquid electrolyte. Such ionic liquid increases a density of a lithium deposition layer on a surface of the lithium metal negative electrode, and thus an energy density of the lithium metal battery may increase during a charging process. In this regard, an overall thickness change of the cell during a charging/discharging process may be minimized, and thus stability and life characteristics of the lithium metal battery may be improved.

When the substituent group of the non-polar chain structure of the cation of the ionic liquid has a length of 4 or more carbon atoms, a solvation volume of lithium ions in the liquid electrolyte may increase. Instead of decreasing interfacial reaction kinetics, the increase in the solvation volume of lithium ions may improve a deposition density of a lithium deposition layer by increasing nucleation and growth uniformity for lithium deposition on a surface of the lithium metal negative electrode.

Also, the ionic liquid having the pyrrolidinium cation represented by Formula 1 forms a stable lithium deposition layer at the lithium metal negative electrode interface during a charging/discharging process, and thus electrochemical stability and interfacial stability of the lithium metal battery may improve.

As used herein, the term "pyrrolidinium cation" denotes a cation of Formula 1 referring to a pyrrolidinium structure or a derivative thereof, and it is not strictly limited to a particular cation of a pyrrolidinium compound. Thus, an ionic liquid used in an embodiment, as shown in Formula 1, may include a cation having any pyrrolidinium structure including a Group V element such as N, P, or As.

In some embodiments, the cation may be a pyrrolidinium cation represented by Formula 2:

Formula 2

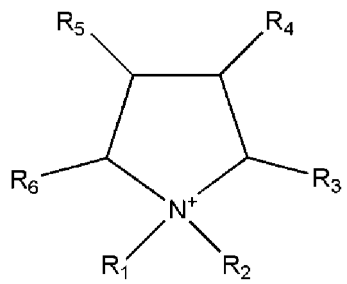

.

In Formula 2, $R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ has 4 or more carbon atoms; and $R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30 alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30 heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a substituted or unsubstituted C2-C30 heterocyclic group, or a substituted or unsubstituted C3-C30 heterocyclic alkyl group, a substituted or unsubstituted C2-C30 heterocyclicoxy group, or a substituted or unsubstituted C3-C30 heterocyclicoxyalkyl group.

For example, the cation may be a pyrrolidinium cation represented by Formula 2a:

Formula 2a

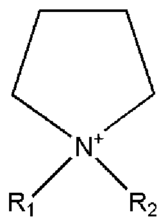

In Formula 2a,

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ has 4 or more carbons.

In Formulas 1, 2, and 2a, at least one hydrogen atom of $R_1$ to $R_6$ may be substituted with a halogen atom, a C1-C30 alkyl group substituted with a halogen atom, a C1-C30 alkoxy group, a C2-C30 alkoxyalkyl group, a hydroxyl group, a nitro group, a cyano group, an amino group, an amidino group, a hydrazine group, a hydrazone group, a carboxylic acid or a salt thereof, a sulfonyl group, a sulfamoyl group, a sulfonic acid or a salt thereof, a phosphoric acid or a salt thereof, a C1-C30 alkyl group, a C2-C30 alkenyl group, a C2-C30 alkynyl group, a C1-C30 heteroalkyl group, a C6-C30 aryl group, a C7-C30 arylalkyl group, a C2-C30 heteroaryl group, a C3-C30 heteroarylalkyl group, a C2-C30 heteroaryloxy group, a C3-C30 heteroaryloxyalkyl group, a C6-C30 heteroarylalkyloxy group, a C4-C30 carbocyclic group, a C5-C30 carbocyclicalkyl group, a C4-C30 carbocyclicoxy group, a C5-C30 carbocyclicoxyalkyl group, a C2-C30 heterocyclic group, or a C3-C30 heterocyclic alkyl group, a C2-C30 heterocyclicoxy group, or a C3-C30 heterocyclicoxyalkyl group.

For example, the at least one hydrogen atom of $R_1$ to $R_6$ may be substituted with a fluorine (-F) atom.

For example, the cation may include at least one selected from N-butyl-N-methylpyrrolidinium, N-methyl-N-pentylpyrrolidinium, N-hexyl-N-methylpyrrolidinium, N-heptyl-N-methylpyrrolidinium, N-methyl-N-octylpyrrolidinium, N-methyl-N-nonylpyrrolidinium, N-decyl-N-methylpyrrolidinium, N-methyl-N-undecylpyrrolidinium, N-dodecyl-N-methylpyrrolidinium, N-methyl-N-tridecylpyrrolidinium, N-methyl-N-tetradecylpyrrolidinium, N-methyl-N-pentadecylpyrrolidinium, N-hexadecyl-N-methylpyrrolidinium, N-heptadecyl-N-methylpyrrolidinium, N-methyl-N-octadecylpyrrolidinium, N-methyl-N-nonadecylpyrrolidinium, N-eicosyl-N-methylpyrrolidinium, N-butyl-N-ethylpyrrolidinium, N-butyl-N-propylpyrrolidinium, N,N-dibutylpyrrolidinium, N-butyl-N-pentylpyrrolidinium, N-butyl-N-hexylpyrrolidinium, N-butyl-N-heptylpyrrolidinium, N-butyl-N-octylpyrrolidinium, N-butyl-N-nonylpyrrolidinium, and N-butyl-N-decylpyrrolidinium. According to the present invention, the amount of the cation may be in a range of greater than about 0 parts by weight to about 3 parts by weight, based on 100 parts by weight of the organic solvent. For example, the amount of the cation may be in a range of greater than about 0 parts by weight to about 2 parts by weight, based on 100 parts by weight of the organic solvent, or greater than about 0 parts by weight to about 1 part by weight, based on 100 parts by weight of the organic solvent. While not wishing to be bound by theory, it is believed that when the amount of the cation is within these ranges, a density of the lithium deposition layer increases, and lifespan characteristics of the lithium metal battery may improve. When the amount of the cation is greater than 3 parts by weight, a deposition density decreases, which may be confirmed by the description of the Examples of the present specification (vide infra).

An anion of the ionic liquid is not particularly limited, and any suitable anion available as a counter ion with respect to the cation of the ionic liquid in the art may be used. Examples of the anion may include at least one selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N^-$, and $(CF_3SO_2)_2N^-$.

In some embodiments, the organic solvent may include an ether solvent. The ether solvent can have excellent deposition and desorption efficiency.

In some embodiments, the organic solvent may include: i) a high dissolution capability ether solvent in which lithium ions are soluble and ii) a fluorine substituted ether solvent represented by the following Formula 3:

Formula 3 $R-\{O(CH_2)_a\}_b-CH_2-O-C_nF_{2n}H$

In Formula 3,

R is $C_mF_{2m}H$ Or $C_mF_{2m+1}$,
n is an integer of 2 or greater,
m is an integer of 1 or greater,
a is an integer of 1 or 2, and
b is 0 or 1.

The high dissolution capability ether solvent in which lithium ions are solvated has solubility characteristics that makes it capable to dissolve a lithium salt to a high concentration, and form an ion conduction activation domain in the electrolyte. By using such an ether solvent, oxidation resistance of the electrolyte may be improved, and high-rate charge/discharge characteristics of the lithium metal battery employing the electrolyte may also be improved.

The fluorinated ether solvent forms an ion conduction inactivation domain in the electrolyte, in which a lithium salt has a very low solubility or almost no solubility. If the electrolyte contains the fluorinated ether solvent, overall viscosity of the electrolyte may be reduced, and oxidation of an ion conduction activation domain in the interface of the electrolyte may be efficiently prevented. Further, the fluorinated ether solvent may perform a role of imparting flame retardancy in such a way that a high dissolution capability ether solvent, which is relatively vulnerable to ignition, may become stabilized to exposure to high temperatures by blocking reactions of the electrolyte with active oxygen.

The fluorine substituted ether solvent may include a $-CH_2-O-$ unit in addition to a $-C_nF_{2n}H$ group in a molecule, wherein the $-CH_2-O-$ unit may have oxygen with unshared electron pairs, and the oxygen may form a coordination bond with lithium. In such a case, diffusion of lithium is more facilitated, and the ion conductivity of the electrolyte may be improved. The fluorinated ether solvent having a $-CF_2-O-$ unit instead of a $-CH_2-O-$ unit beside a $-C_nF_{2n}H$ group may make diffusion of lithium difficult compared to the compound of Formula 1 having the $-CH_2-O-$ unit due to an electron accepting $CF_2$ group in which unshared electron pairs of oxygen are adjacent to each other.

In some embodiments, an amount of the fluorine substituted ether solvent represented by Formula 3 may be greater than that of the high dissolution capability ether solvent in which lithium ions are solvated. If an amount of the fluorine substituted ether solvent represented by the Formula 3 is less than or the same as that of the high dissolution capability ether solvent in which lithium ions are soluble, it may be difficult to obtain the electrolyte having suitable high voltage stability and flame retardancy, or it may be difficult to obtain suitable ion conductivity due to a substantially high viscosity of the electrolyte.

The high dissolution capability ether solvent in which lithium ions are solvated may be contained in an amount of about 15% by volume to about 45% by volume, e.g., about 20% by volume to about 40%, or about 25% by volume to about 35% by volume, based on the total volume of the high dissolution capability ether solvent and fluorine substituted ether solvent. While not wishing to be bound by theory, it is understood that when the ether solvent is in the above amount ranges, the electrolyte may have excellent ion conductivity.

The fluorine substituted ether solvent may be contained in an amount of about 55% by volume to about 85% by volume, e.g., about 60% by volume to about 85%, or about 65% by volume to about 85% by volume, based on the total volume of the high dissolution capability ether solvent and fluorine substituted ether solvent. While not wishing to be bound by theory, it is understood that when the fluorine substituted ether solvent is in the above amount range, the electrolyte is prepared easily, and the electrolyte may have an excellent ion conductivity without deteriorating oxidation resistance or flame retardancy of the lithium metal battery, or without the viscosity value of the electrolyte becoming too high.

When the high dissolution capability ether solvent in which lithium ions are solvated and the fluorine substituted ether solvent represented by Formula 3 are used, an amount of a lithium salt increases which causes ion conductivity (high-rate) characteristics to improve according to concentration gradient minimization generated during a charging process. Thus, chances of the solvent molecules to contact the lithium metal negative electrode decrease, thereby reducing a side product layer formed by a reduced product of a solid electrolyte interphone (SEI) layer and an electrolyte. Therefore, a content of the lithium salt in the lithium metal battery according to an embodiment may be in a range of about 0.1 molar (M) to about 7 M, about 0.5 molar (M) to about 5 M, or about 1 molar (M) to about 3 M, and the amount of solvent may be reduced during a charging process, which may prevent formation of the SEI layer on a surface of the lithium metal negative electrode.

The fluorine substituted ether solvent represented by Formula 3 influences flame retardancy and oxidation resistance of electrolyte. The fluorine substituted ether solvent is added in the electrolyte so that a porous thin film-shaped SEI is formed on the surface of the negative electrode to result in suppressing additional reduction reactions of the electrolyte, preventing oxidation of the electrolyte on the interface with a lithium negative electrode, improving flame retardancy of the electrolyte, and lowering viscosity of the electrolyte to about 5 centipoises (cP) or lower even at high concentration values of the a lithium salt. The fluorine substituted ether solvent of Formula 3 minimizes oxidation of the electrolyte at the positive electrode side, lowers viscosity of the electrolyte, effectively imparts flame retardancy to the electrolyte, and greatly influences electrolyte viscosity. When the electrolyte according to an embodiment is used, flame retardancy and safety, e.g., high voltage safety of the battery is improved, and the battery has high energy density characteristics without forming decomposition products of the electrolyte on interface between the lithium negative electrode and the electrolyte.

Further, the high dissolution capability ether solvent in which lithium ions are solvated may dissolve a high concentration lithium salt. The high dissolution capability ether solvent may be capable of solving a lithium salt in an amount of about 0.1 M to about 7 M, for example, about 0.2 M to about 7 M, or about 0.5 M to about 5 M. An ether which can dissolve $LiPF_6$ in an amount of about 0.1 M to about 7 M, is specifically mentioned.

Therefore, the lithium metal battery using the electrolyte including the high dissolution capability ether solvent has improved ion conductivity and also improved oxidation resistance and high-rate charge/discharge characteristics obtained by dissolving a high concentration lithium salt.

Since the fluorine substituted ether solvent represented by Formula 3 has electron withdrawing groups, it is strongly resistant to oxidation. Therefore, the fluorine substituted ether solvent represented by Formula 3 may prevent oxidation of the electrolyte that may occur from the positive electrode side at high voltages during charging.

As a result, the fluorine substituted ether solvent represented by Formula 3 may form an SEI layer on the negative electrode surface, and the fluorine substituted ether solvent represented by Formula 3 has an improved stability, namely improved lifetime characteristics, high-rate charge/discharge characteristics, and safety of the lithium metal battery may be improved at high voltage values.

In Formula 3, R is $-CF_2CF_2H$, $-CF_2CF_2CF_2H$, $-CF_2CF_2CF_2CF_2H$, or $CF_3$, and $C_nF_{2n}H$ is $-CF_2CF_2H$, $-CF_2CF_2CF_2H$, or $-CF_2CF_2CF_2CF_2H$.

The fluorine substituted ether solvent may be a compound represented by the following Formula 4:

Formula 4 $R\text{-}CH_2\text{-}O\text{-}C_nF_{2n}H$.

In Formula 4,

R is $C_{m+1}H_mF_{2m}$ or $C_mF_{2m+1}$,
n is an integer of 2 to 5, and
m is an integer of 1 to 5.

The fluorine substituted ether solvent represented by Formula 4 may be at least one selected from $HCF_2CF_2CH_2OCF_2CF_2H$, $HCF_2CF_2CH_2OCF_2CF_2CF_2CF_2H$, $HCF_2CF_2OCH_2CF_3$, $HCF_2CF_2OCH_2CH_2OCF_2CF_2H$, $HCF_2CF_2OCH_2CH_2CH_2OCF_2CF_2H$, $HCF_2CF_2CH_2OCF_2CF_2CF_2H$, $HCF_2CF_2OCH_2CH_2OCF_2CF_2CF_2H$, and $HCF_2CF_2OCH_2CH_2CH_2OCF_2CF_2CF_2H$. Since such fluorine substituted ether solvent has a low polarity, a possibility that impurities may be dissolved and may contaminate the electrolyte containing the fluorine substituted ether solvent is low.

Since the fluorine substituted ether solvent used in the electrolyte has a high flash point of about 80°C or greater, the electrolyte has improved flame retardancy, and high temperature stabilities of the battery may be improved. Further, the fluorine substituted ether solvent is low in polarity and has a structure in which fluorine substituted functional groups are bonded to the $-CH_2\text{-}O\text{-}$ moiety. Therefore, such a fluorine substituted ether solvent mixes very well with the high dissolution capability ether solvent in which lithium ions are solvated, such as dimethyl ether (DME).

For example, the high dissolution capability ether solvent in which lithium ions are solvated may be a glyme solvent.

The high dissolution capability ether solvent in which lithium ions are solvated may be at least one selected from ethylene glycol dimethyl ether (1,2-dimethoxyethane), ethylene glycol diethyl ether (1,2-diethoxyethane), propylene glycol dimethyl ether, propylene glycol diethyl ether, butylene glycol dimethyl ether, butylene glycol diethyl ether, diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, dipropylene glycol dimethyl ether, tripropylene glycol dimethyl ether, tetrapropylene glycol dimethyl ether, dipropylene glycol diethyl ether, tripropylene glycol diethyl ether, tetrapropylene glycol diethyl ether, dibutylene glycol dimethyl ether, tributylene glycol dimethyl ether, tetrabutylene glycol dimethyl ether, dibutylene glycol diethyl ether, tributylene glycol diethyl ether, tetrabutylene glycol diethyl ether, poly(ethyleneglycol) dilaurate (PEGDL), poly(ethyleneglycol) monoacrylate (PEGMA), and poly(ethyleneglycol) diacrylate (PEGDA).

The electrolyte may have a viscosity in the range of about 5 centipoise (cP) or less for example, about 4 cP or less, about 3 cP or less, about 2 cP or less, or about 1 cP or less at 25°C, for example about 5 cP to about 0.1 cP, or about 4 cP to about 0.5 cP. When the viscosity of the electrolyte is in the above ranges, ions are moved freely within the electrolyte, and ion conductivity of the electrolyte is suitable.

In some embodiments, the liquid electrolyte may further include a lithium salt.

Any suitable lithium salt that is used to prepare an electrolyte in the art may be used. Examples of the lithium salt may include at least one selected from LiSCN, $LiN(CN)_2$, $LiClO_4$, $LiBF_4$, $LiAsF_6$, $LiPF_6$, $LiCF_3SO_3$, $Li(CF_3SO_2)_2N$, $Li(CF_3SO_2)_3C$, $LiSbF_6$, $LiN(SO_2CF_3)_2$, $Li(FSO_2)_2N$, $LiC_4F_9SO_3$, $LiN(SO_2CF_2CF_3)_2$, $LiSbF_6$, $LiPF_3(CF_2CF_3)_3$, $LiPF_3(C_2F_5)_3$, $LiPF_3(CF_3)_3$, LiCl, LiF, LiBr, LiI, lithium difluoro(oxalato)borate (LiFOB), and lithium bis(oxalato)borate (LiBOB).

The lithium salt according to an embodiment is a fluorine-containing sulfone compound. Examples of fluorine-containing sulfone imide compound may include at least one selected from $LiN(FSO_2)_2$(LiFSI), $LiN(CF_3SO_2)_2$(LiTFSI), $LiN(CF_2SO_2)(CF_3CF_2CF_2CF_2SO_2)$, $LiN(CF_3CF_2SO_2)_2$, $LiC(CF_3SO_2)_2$, and $LiC(CF_3CF_2SO_2)_2$.

An amount of the lithium salt may be in a range of about 0.1 M to about 7 M, for example, about 1 M to about 7 M, or about 3 M to about 5 M, based on the liquid electrolyte. While not wishing to be bound by theory, it is understood that when the amount of the lithium salt is within the above ranges, lifespan characteristics of a lithium metal battery improve without an increase in an internal resistance of the electrolyte.

A viscosity of the liquid electrolyte may be about 5 cP or less at 25°C, e.g., about 2.5 cP to about 4 cP. While not wishing to be bound by theory, it is understood that when the viscosity of the electrolyte is within the above ranges, a conductivity and an anti-oxidant property of the electrolyte are excellent, and a lithium metal battery including the electrolyte may have high voltage and improved stability.

An ion conductivity of the electrolyte at 25°C is about 1 milliSiemens per centimeter (mS/cm) or greater, or, for example, in a range of about 1 mS/cm to about 10 mS/cm, or about 1 mS/cm to about 5 mS/cm.

The liquid electrolyte according to an embodiment may additionally include at least one selected from selected from ethylene carbonate, propylene carbonate, dimethyl carbonate, diethyl carbonate, butylene carbonate, ethylmethyl carbonate, fluoroethylene carbonate, methylpropyl carbonate, ethylpropyl carbonate, methylisopropyl carbonate, dipropyl carbonate, dibutyl carbonate, gamma butyrolactone, dimethylene glycol dimethyl ether, trimethylene glycol dimethyl ether, tetraethylene glycol dimethyl ether, polyethylene glycol dimethyl ether, succinonitrile, dimethyl sulfone, ethylmethyl sulfone, diethyl sulfone, adiponitrile, 1,1,2,2-tetrafluoroethyl 2,2,3,3-tetrafluoropropyl ether, 2,2,3,3,4,4,5,5-octafluoropentyl-1,1,2,2-tetrafluoroethyl ether, benzonitrile, acetonitrile, tetrahydrofuran, 2-methyltetrahydrofuran, dioxolane, 4-methyldioxolane, N,N-dimethylformamide, N,N-dimethylacetamide, dimethyl sulfoxide, dioxane, sulfolane, dichloroethane, chlorobenzene, and nitrobenzene.

For the purpose of improving charge/discharge characteristics, flame retardancy and other properties of the liquid electrolyte, pyridine, triethyl phosphate, triethanolamine, cyclic ether, ethylene diamine, n-glyme, hexamethyl phosphoramide, nitrobenzene derivatives, sulfur, quinine imine dyes, N-substituted oxazolidinone, N,N-substituted imidazolidine, ethylene glycol dialkyl ether, ammonium salts, pyrrole, 2-methoxy ethanol, aluminum trichloride and so on may be added thereto. In some cases, the electrolyte may additionally include a halogen-containing solvent such as carbon tetrachloride and ethylene trifluoride in order to impart non-flammability to the liquid electrolyte.

The liquid electrolyte in the lithium metal battery according to embodiments may include: i) DME as a high dissolution capability ether solvent in which lithium ions are solvated, ii) TTE ($HCF_2CF_2CH_2OCF_2CF_2H$) or OTE ($HCF_2CF_2CH_2OCF_2CF_2CF_2CF_2H$) as a fluorine substituted ether solvent, and iii) LiFSI or LiTFSI as a lithium salt. Here, i) DME and ii) TTE or OTE may be mixed in a ratio of about 40:60 (1:1.5) to 20:80 (1:4) by volume. The lithium salt, LiFSI or LiTFSI, is contained in an amount ranging from about 1 M to about 6 M, for example, about 1 M to about 5 M, about 1 M to about 4 M, or about 1 M to about 3 M.

The organic solvent in the electrolyte may further include a low boiling point solvent. The low boiling point solvents are solvents having a boiling point range of about 200°C or lower, for example, about 180°C or lower, or about 150°C or lower at 25°C and an atmospheric pressure.

For example, the organic solvents may include a dialkyl carbonate, a cyclic carbonate, a linear or cyclic ester, a linear or cyclic amide, an aliphatic nitrile, a linear or cyclic ether, and any derivative thereof.

Although examples of the organic solvents may include dimethyl carbonate (DMC), ethylmethyl carbonate (EMC), methyl propyl carbonate, ethyl propyl carbonate, diethyl carbonate (DEC), dipropyl carbonate, propylene carbonate (PC), ethylene carbonate (EC), fluoroethylene carbonate (FEC), butylene carbonate, ethyl propionate, ethyl butyrate, acetonitrile, succinonitrile, dimethyl sulfoxide, dimethyl formamide, dimethyl acetamide, γ-valerolactone, γ-butyrolactone, and tetrahydrofuran, the organic solvent is not limited thereto, and any suitable low boiling organic solvent may be used.

The lithium metal battery may include a lithium deposition layer formed on a surface of the lithium metal negative electrode, and a density of the lithium deposition layer may increase by adding an ionic liquid having a pyrrolidinium cation represented by Formula 1.

In some embodiments, a deposition density of the lithium deposition layer calculated as defined in Equation 1 may be 30% or greater.

Equation 1

$$\rho_d = \frac{d_{th}}{d_{re}} \times 100$$

In Equation 1,

$\rho_d$ is a deposition density (percent, %) with respect to a lithium theoretical density of the lithium deposition layer,
$d_{th}$ is a theoretical thickness of the lithium deposition layer,
$d_{re}$ is an actual thickness of the lithium deposition layer, and
$d_{th}$ is calculated according to Equation 2:

Equation 2

$$d_{th} = \frac{C_d}{C_{th}} \times \frac{1}{\rho_{th} A} \quad .$$

In Equation 2,

$C_{th}$ is a theoretical capacity of a lithium metal, which is 3,860 milliampere hours per gram (mAh/g),
$\rho_{th}$ is a theoretical density of a lithium metal, which is 0.53 grams per cubic centimeter (g/cc),
$A$ is a deposition area (square centimeters, $cm^2$), and
$C_d$ is a deposition capacity (milliampere hours, mAh).

Types of lithium metal battery are not particularly limited and may include a lithium primary battery as well as a lithium secondary battery such as a lithium ion battery, a lithium ion polymer battery, or a lithium sulfur battery.

The lithium metal negative electrode may be a lithium thin film or a lithium alloy electrode.

The lithium alloy may include a metal/metalloid that is alloyable with lithium. Examples of the metal/metalloid that is alloyable with lithium may include at least one selected from Si, Sn, Al, Ge, Pb, Bi, Sb, Si-Y' alloys (Y' is at least one selected from an alkali metal, alkaline earth metals, a Group 13 element, a Group 14 element, a transition metal, and a rare earth element, with Y' not being Si), a Sn-Y" alloys (Y" is at least one selected from an alkali metal, alkaline earth metal, a Group 13 element, a Group 14 element, a transition metal, and a rare earth element, with Y" not being Sn). Examples of the element Y' and Y" may include at least one selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, and Po.

The lithium metal battery has improved stabilities at a high voltage range of about 4.35 V or greater, e.g., about 4.4 V to about 4.5 V.

The lithium metal battery according to an embodiment may be manufactured by forming a lithium deposition layer having a jelly bean shaped morphology to a thickness of about 10 micrometers (μm) to about 30 μm, e.g., about 20 μm to about 30 μm, or about 20 μm, on the surface of the lithium negative electrode after performing a charging and discharging process for 20 to 30 cycles under charge/discharge conditions of 0.5C at about 3 V to about 4.4 V.

For example, the lithium metal battery may be manufactured by the following method.

First, a positive electrode is prepared.

For example, a positive active material composition in which a positive active material, a conducting agent, a binder, and a solvent are mixed is prepared. The positive active material composition is directly coated on a metal current collector to manufacture a positive electrode plate. Alternatively, after the positive active material composition is cast onto a separate support, a film delaminated from the support is laminated on a metal current collector to manufacture a positive electrode plate. The positive electrode is not limited to the above listed forms, and the positive electrode may be formed in other forms in addition to the above-mentioned forms.

Any suitable lithium complex oxide material known in the art may be used without limitation as the positive active material.

Examples of the positive active material may include at least one selected from a complex oxide of lithium with at least one metal selected from cobalt, manganese, and nickel. For example, the positive electrode active material may

be a compound represented by at least one selected from: $Li_aAl_{1-b}B'_bD'_2$ (wherein 0.90≤a≤1.8 and 0≤b≤0.5); $Li_aE_{1-b}B'_bO_{2-c}D'_c$ (wherein 0.90≤a≤1.8, 0≤b≤0.5, and 0≤c≤0.05); $LiE_{2-b}B'_bO_{4-c}D'_c$ (wherein 0≤b≤0.5 and 0≤c≤0.05); $Li_aNi_{1-b-c}Co_bB'_cD'_\alpha$ (wherein 0.90≤a≤1.8, 0≤b≤0.5, 0≤c≤0.05, and 0<α≤2); $Li_aNi_{1-b-c}Co_bB'_cO_{2-\alpha}F'_\alpha$ (wherein 0.90≤a≤1.8, 0≤b≤0.5, 0≤c≤0.05, and 0<α≤2); $Li_aNi_{1-b-c}Co_bB'_cO_{2-\alpha}F'_2$ (wherein 0.90≤a≤1.8, 0≤b≤0.5, 0≤c≤0.05, and 0<α≤2); $Li_aNi_{1-b-c}Mn_bB'_cD'_\alpha$ (wherein 0.90≤a≤1.8, 0≤b≤0.5, 0≤c≤0.05, and 0<α≤2); $Li_aNi_{1-b-c}Mn_bB'_cO_{2-\alpha}F'_\alpha$ (wherein 0.90≤a≤1.8, 0≤b≤0.5, 0≤c≤0.05, and 0<a<2); $Li_aNi_{1-b-c}Mn_bB'_cO_{2-\alpha}F'_2$ (wherein 0.90≤a≤1.8, 0≤b≤0.5, 0≤c≤0.05, and 0<a<2); $Li_aNi_bE_cG_dO_2$ (wherein 0.90≤a≤1.8, 0≤b≤0.9, 0≤c≤0.5, and 0.001≤d≤0.1); $Li_aNi_bCo_cMn_dG_eO_2$ (wherein 0.90≤a≤1.8, 0≤b≤0.9, 0≤c≤0.5, 0≤d≤0.5, and 0.001≤e≤0.1); $Li_aNiG_bO_2$ (wherein 0.90≤a≤1.8 and 0.001≤b≤0.1); $Li_aCoG_bO_2$ (wherein 0.90≤a≤1.8 and 0.001≤b≤0.1); $Li_aMnG_bO_2$ (wherein 0.90≤a≤1.8 and 0.001≤b≤0.1); $Li_aMn_2G_bO_4$ (wherein 0.90≤a≤1.8 and 0.001≤b≤0.1); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (wherein 0≤f≤2); $Li_{(3-f)}Fe_2(PO_4)_3$ (wherein 0≤f≤2); and $LiFePO_4$.

In the foregoing Formulas, A is at least one selected from Ni, Co, and Mn; B' is at least one selected from Al, Ni, Co, Mn, Cr, Fe, Mg, Sr, V, and a rare earth element; D' is at least one selected from O, F, S, and P; E is at least one selected from Co, and Mn; F' is at least one selected from F, S, and P; G is at least one selected from Al, Cr, Mn, Fe, Mg, La, Ce, Sr, and V; Q is at least one selected from Ti, Mo, and Mn; I' is at least one selected from Cr, V, Fe, Sc, and Y; and J is at least one selected from V, Cr, Mn, Co, Ni, and Cu.

For example, the positive active material may be $LiCoO_2$, $LiMn_xO_{2x}$ (wherein x is 1 or 2), $LiNi_{1-x}Mn_xO_{2x}$ (wherein 0<x<1), $LiNi_{1-x-y}Co_xMn_yO_2$ (wherein 0≤x≤0.5 and 0≤y≤0.5), or $LiFePO_4$.

A coating layer formed on the surface of the compound, or a mixture of the compound and compounds having coating layers may be used. The coating layers may include coating an element compound such as an oxide and hydroxide of the coating element, oxyhydroxide of the coating element, oxycarbonate of the coating element, and hydroxy carbonate of the coating element. The compound forming the coating layers may be amorphous or crystalline. Examples of the coating elements included in the coating layers may include at least one selected from Mg, Al, Co, K, Na, Ca, Si, Ti, V, Sn, Ge, Ga, B, As, and Zr. If a coating layer-forming process may be performed by a method such as a spray coating method, a dipping method and so on, which does not adversely affect physical properties of the positive electrode active material by using such an element in the compound, any suitable coating method may be used. Since details of the coating method can be determined by one of skill in the art without undue experimentation, a further detailed description of it is omitted here.

In order to obtain a high density lithium metal battery, it is advantageous to use a high density positive electrode. $LiCoO_2$ is used when manufacturing the high density positive electrode.

Examples of the conducting agent may include: at least one selected from carbon black, graphite such as natural graphite or artificial graphite, acetylene black, Ketjen black, carbon fiber, carbon nanotube, metal powder, a metal fiber or a metal tube comprising copper, nickel, aluminum, or silver; and a conductive polymer such as a polyphenylene derivative. However, the conducting agent is not limited to these examples, and the examples of the conducting agent may include any suitable material for a conducting agent in the art in.

Examples of the binder may include at least one selected from a vinylidene fluoride/hexafluoropropylene copolymer, polyvinylidene fluoride, polyimide, polyethylene, polyester, polyacrylonitrile, polymethyl methacrylate, polytetrafluoroethylene (PTFE), carboxymethyl cellulose/styrene-butadiene rubber (SMC/SBR) copolymers, and styrene butadiene rubber-based polymers. However, the binder is not limited to these examples, and the examples of the binder may include any suitable material used as a binder in the art.

Examples of the solvent may include at least one selected from N-methylpyrrolidone (NMP), acetone, and water. However, the solvent is not limited to these examples, and any suitable solvent may be used.

The positive active material, conducting agent, binder and solvent are contained in an amount that is ordinarily used in the lithium metal battery. Depending on the use and composition of the lithium metal battery, at least one of the conducting agent, the binder and the solvent may be omitted if desired.

Next, a lithium metal thin film or a lithium alloy thin film as a lithium metal negative electrode is prepared.

Next, a separator that is interposed between the positive electrode and the lithium metal negative electrode is prepared.

A dielectric thin film having high ion permeability and mechanical strength may be used as the separator. The separator may have a pore diameter of about 0.01 μm to about 10 μm, and may have has a thickness of about 5 μm to about 20 μm. Examples of the separator may include a sheet, a non-woven fabric, and other products formed from an olefin polymer such as at least one selected from polypropylene, a glass fiber, and polyethylene. When a solid polymer electrolyte is used as the electrolyte, the solid polymer electrolyte may also be used as the separator.

Examples of the separator may include: a multi-layer including two or more layers of at least one selected from polyethylene, polypropylene, and polyvinylidene fluoride; and a mixed multi-layer such as a polyethylene/polypropylene double layer separator, a polyethylene/polypropylene/polyethylene triple layer separator, a polypropylene/polyethylene/polypropylene triple layer separator.

An electrolyte according to an embodiment is used as an electrolyte in a lithium metal battery.

A lithium metal battery according to an embodiment may additionally include at least one selected from selected from a liquid electrolyte, a solid electrolyte, a gel electrolyte, and a polymer ionic liquid.

A lithium metal battery according to other embodiment may additionally include at least one selected from a liquid electrolyte, a solid electrolyte, a gel electrolyte and a polymer ionic liquid, and a separator.

The liquid electrolyte additionally includes at least one selected from an organic solvent, an ionic liquid, and a lithium salt.

Any suitable material that is used as the organic solvent in the lithium metal battery may be used as the organic solvent. Non-limiting examples of the organic solvent may include a carbonate compound, a glyme compound, a dioxolane compound, etc.

Examples of the carbonate solvent may include at least one selected from ethylene carbonate, propylene carbonate, dimethyl carbonate, fluoroethylene carbonate, diethyl carbonate, and ethylmethyl carbonate.

Examples of the glyme solvent may include at least one selected from poly(ethylene glycol) dimethyl ether (PEGDME, polyglyme), tetra(ethylene glycol) dimethyl ether (TEGDME, tetraglyme), tri(ethylene glycol) dimethyl ether (triglyme), poly(ethylene glycol) dilaurate (PEGDL), poly(ethylene glycol) monoacrylate (PEGMA), and poly(ethylene glycol) diacrylate (PEGDA).

Examples of the dioxolane based compound may include at least one selected from 3-dioxolane, 4,5-diethyl-dioxolane, 4,5-dimethyl-dioxolane, 4-methyl-1,3-dioxolane, and 4-ethyl-1,3-dioxolane.

Examples of the organic solvent may include 2,2-dimethoxy-2-phenylacetophenone, dimethoxyethane, diethoxyethane, tetrahydrofuran, gamma butyrolactone, etc.

The gel electrolyte is a gel-shaped electrolyte, and the gel electrolyte may include any gel electrolyte material well-known in the art.

For example, the gel electrolyte may contain a polymer and a polymer ionic liquid.

For example, the polymer may be a solid graft (block) copolymer electrolyte.

The solid electrolyte may be an organic solid electrolyte or an inorganic solid electrolyte.

Examples of the organic solid electrolyte may include at least one selected from a polyethylene derivative, a polyethylene oxide derivative, a polypropylene oxide derivative, a phosphate ester polymer, polyester sulfide, polyvinyl alcohol, polyvinylidene fluoride, and a polymer including an ionic dissociative group.

Examples of the inorganic solid electrolyte may include at least one selected from $Cu_3N$, $Li_3N$, LiPON, $Li_3PO_4{\cdot}Li_2S{\cdot}SiS_2$, $Li_2S{\cdot}GeS_2{\cdot}Ga_2S_3$, $(Na, Li)_{1+x}Ti_{2-x}Al_x(PO_4)_3$ (wherein $0.1 \leq x \leq 0.9$), $Li_{1+x}Hf_{2-x}Al_x(PO_4)_3$ (wherein $0.1 \leq x \leq 0.9$), $Na_3Zr_2Si_2PO_{12}$, $Li_3Zr_2Si_2PO_{12}$, $Na_5ZrP_3O_{12}$, $Na_5TiP_3O_{12}$, $Na_3Fe_2P_3O_{12}$, $Na_4NbP_3O_{12}$, $NLi_{0.3}La_{0.5}TiO_3$, $Na_5MSi_4O_{12}$ (wherein M is rare earth elements such as Nd, Gd, and Dy), $Li_5ZrP_3O_{12}$, $Li_5TiP_3O_{12}$, $Li_3Fe_2P_3O_{12}$, $Li_4NbP_3O_{12}$, $Li_{1+x}(M,Al,Ga)_x(Ge_{1-y}Ti_y)_{2-x}(PO_4)_3$ (wherein $0 \leq x \leq 0.8$, $0 \leq y \leq 1.0$, and M is Nd, Sm, Eu, Gd, Tb, Dy, Ho, Er, Tm, or Yb), $Li_{1+x+y}Q_xTi_{2-x}Si_yP_{3-y}O_{12}$ (wherein $0<x \leq 0.4$, $0<y \leq 0.6$, and Q is Al or Ga), $Li_6BaLa_2Ta_2O_{12}$, $Li_7La_3Zr_2O_{12}$, $Li_5La_3Nb_2O_{12}$, $Li_5La_3M_2O_{12}$ (M is Nb or Ta), and $Li_{7+x}A_xLa_{3-x}Zr_2O_{12}$ (wherein $0<x<3$ and A is Zn).

The polymer ionic liquid may be, for example, a polymerization product of ionic liquid monomers, or a polymeric compound. The polymer ionic liquid is highly soluble in an organic solvent, and thus may further improve the ionic conductivity of the electrolyte when further added.

When the polymer ionic liquid is obtained by polymerizing the above-described ionic liquid monomers, the polymer ionic liquid is prepared such that it has appropriate anions which are capable of imparting solubility with respect to an organic solvent through an anion substitution reaction after subjecting a polymerization reaction-completed product to cleaning and drying processes.

The polymer ionic liquid according to an exemplary embodiment may include a repeating unit including:

i) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, and a triazole-based cation,

ii) at least one anion at least one selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, and $(O(CF_3)_2C_2(CF_3)_2O)_2PO^-$.

A polymer ionic liquid according to other embodiment may be prepared by polymerizing ionic liquid monomers. The ionic liquid monomers may comprise an anion and at least one cation selected from an ammonium based cation, a pyrrolidinium based cation, a pyridinium based cation, a pyrimidinium based cation, an imidazolium based cation, a piperidinium based cation, a pyrazolium based cation, an oxazolium based cation, a pyridazinium based cation, a phosphonium based cation, a sulfonium based cation, and a triazole based cation, which has a functional group that is capable of polymerizing with a vinyl group, an allyl group, an acrylate group, a methacrylate group, etc.

The ionic liquid monomers may comprise, for example, at least one selected from 1-vinyl-3-ethylimidazolium bromide, a compound represented by the following Formula 5, and a compound represented by the following Formula 6:

Formula 5

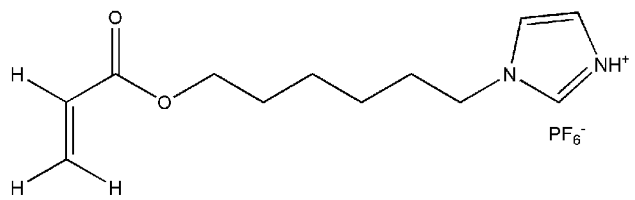

Formula 6

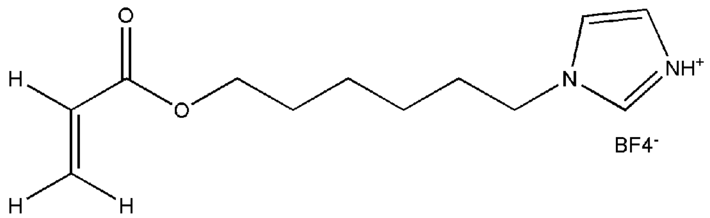

The above-described polymer ionic liquid may be, for example, a compound represented by the following Formula 7 or a compound represented by the following Formula 8:

Formula 7

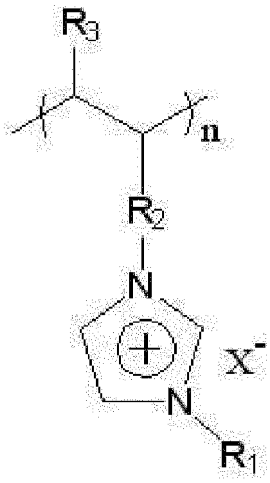

wherein in Formula 7,

$R_1$ and $R_3$ each independently is hydrogen, a substituted or unsubstituted $C_1$-$C_{30}$ alkyl group, a substituted or unsubstituted $C_2$-$C_{30}$ alkenyl group, a substituted or unsubstituted $C_2$-$C_{30}$ alkynyl group, a substituted or unsubstituted $C_6$-$C_{30}$ aryl group, a substituted or unsubstituted $C_2$-$C_{30}$ heteroaryl group, or a substituted or unsubstituted $C_4$-$C_{30}$ carbocyclic group,
$R_2$ is a single bond, a $C_1$-$C_3$ alkylene group, a $C_6$-$C_{30}$ arylene group, a $C_2$-$C_{30}$ heteroarylene group, or a $C_4$-$C_{30}$ carbocyclic group,
$X^-$ represents an anion of an ionic liquid, and
n may be from 500 to 2,800; and

Formula 8

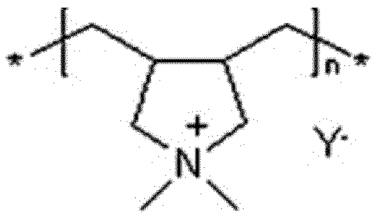

In Formula 8,

$Y^-$ is the same as $X^-$ in Formula 6,
n may be from 500 to 2,800, and
$Y^-$ is bis(trifluoromethanesulfonyl)imide (TFSI), $BF_4$, or $CF_3SO_3$.

Examples of the polymer ionic liquid may include at least one cation selected from a poly(1-vinyl-3-alkylimidazolium) cation, a poly(1-allyl-3-alkylimidazolium) cation, and a (poly(1-(methacryloyloxy)-3-alkylimidazolium) cation, and at least one anion selected from $CH_3COO^-$, $CF_3COO^-$, $CH_3SO_3^-$, $CF_3SO_3^-$, $(CF_3SO_2)_2N^-$, $(FSO_2)_2N^-$, $(CF_3SO_2)_3C^-$, $(CF_3CF_2SO_2)_2N^-$, $C_4F_9SO_3^-$, $C_3F_7COO^-$, and $(CF_3SO_2)(CF_3CO)N^-$.

Examples of compounds represented by Formula 7 may include poly(diallyldimethylammonium bis(trifluoromethanesulfonyl)imide).

Examples of a polymer ionic liquid according to other embodiment may include a low molecular weight polymer, a thermally stable ionic liquid, and a lithium salt. The low molecular weight polymer may have an ethylene oxide chain. The low molecular weight polymer may be a glyme. Here, examples of the glyme may include polyethylene glycol dimethyl ether (polyglyme), tetraethylene glycol dimethyl ether (tetraglyme), and triethylene glycol dimethyl ether (triglyme).

The low molecular weight polymer may have a weight average molecular weight of about 75 to about 2,000, e.g., about 150 to about 1,000, or about 250 to about 500.

As shown in FIG. 1, the lithium metal battery 11 includes a positive electrode 13, a lithium negative electrode 12, and a separator 14. The positive electrode 13, the negative electrode 12 and the separator 14 are wound or folded before they are accommodated into a battery case 15. Subsequently, an electrolyte according to an embodiment is injected into the battery case 15, and the battery case 15 containing the electrolyte is sealed by a cap assembly 16 to complete the lithium metal battery 11. Examples of the battery case may include a cylindrical battery case, a rectangular battery case, a thin film type battery case. For example, the lithium metal battery may be a large thin film type battery. The lithium metal battery may be a lithium ion battery.

The lithium metal battery may be used in electric vehicles (EVs) since the lithium metal battery is excellent in lifetime characteristics and high-rate characteristics. For example, the lithium metal battery may be used in hybrid vehicles such as plug-in hybrid electric vehicles (PHEVs), etc. Further, the lithium metal battery may be used in fields in which storage of a large amount of electric power is required. For example, the lithium metal battery may be used in electric bicycles, electric tools.

For purposes of interpreting this specification, definitions of substituent groups used in formulas apply as follows.

As used herein, the term "alkyl" refers to a fully saturated branched or unbranched (or straight chain or linear) hydrocarbon. Examples of the "alkyl" group may include methyl, ethyl, n-propyl, iso-propyl, n-butyl, iso-butyl, sec-butyl, n-pentyl, isopentyl, neo-pentyl, iso-amyl, n-hexyl, 3-methylhexyl, 2,2-dimethylpentyl, 2,3-dimethylpentyl, and n-heptyl.

At least one hydrogen atom of the "alkyl" group may be substituted with a halogen atom, a C1-C20 alkyl group substituted with a halogen atom (e.g.: $CCF_3$, $CHCF_2$, $CH_2F$, or $CCl_3$), a C1-C20 alkoxy group, a C2-C20 alkoxyalkyl group, a hydroxy group, a nitro group, a cyano group, an amino group, an amidino group, a hydrazine group, a hydrazone group, a carboxylic acid or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C7-C20 heteroarylalkyl group, a C6-C20 heteroaryloxy group, a C6-C20 heteroaryloxyalkyl group, and a C6-C20 heteroarylalkyl group.

As used herein, the term "a halogen atom" includes fluorine, bromine, chlorine, and iodine.

As used herein, the term "a C1-C20 alkyl group substituted with a halogen atom" refers to a C1-C20 alkyl group in which at least one halo group is substituted, and examples of the C1-C20 alkyl group substituted with a halogen atom may include monohaloalkyl, dihaloalkyl, or polyhaloalkyl including perhaloalkyl.

Monohaloalkyl refers to an alkyl group having one iodine, bromine, chlorine, or fluorine, and dihaloalkyl or polyhaloalkyl refers to an alkyl group having at least two halogen atoms that are identical to or different from each other.

As used herein, the term "alkoxy" refers to alkyl-O-, and the alkyl group is the same as defined above. Examples of the alkoxy group may include methoxy, ethoxy propoxy, 2-propoxy, butoxy, tert-butoxy, pentyloxy, hexyloxy, cyclopropoxy, and cyclohexyloxy. At least one hydrogen atom of the alkoxy group may be substituted with the same substituent groups as described above with reference to the alkyl group. In this regard, the term "alkoxy" includes a substituted alkoxy moiety.

As used herein, the term "alkoxyalkyl" refers to an alkyl group substituted by the alkoxy group described above. At least one hydrogen atom of the alkoxyalkyl may be substituted with the same substituent groups as described above with reference to the alkyl group. In this regard, the term "alkoxyalkyl" includes a substituted alkoxyalkyl moiety.

As used herein, the term "alkenyl" refers to a branched or unbranched hydrocarbon having at least one carbon-carbon double bond. Examples of the alkenyl group may include vinyl, allyl, butenyl, iso-propenyl, and iso-butenyl. At least one hydrogen of the alkenyl may be substituted with the same substituent groups as described above with reference to the alkyl group. In this regard, the term "alkenyl" includes a substituted alkenyl moiety.

As used herein, the term "alkynyl" refers to a branched or unbranched hydrocarbon having at least one carbon-carbon triple bond. Examples of the alkynyl group may include ethynyl, butynyl, iso-butynyl, and iso-propynyl.

At least one hydrogen of the alkynyl may be substituted with the same substituent groups as described above with reference to the alkyl group. In this regard, the term "alkynyl" includes a substituted alkynyl moiety.

As used herein, the term "aryl" is used alone or combined and refers to an aromatic hydrocarbon including at least one ring.

The term "aryl" may refer to a group in which the aromatic ring is fused to at least one cycloalkyl ring.

Examples of the aryl may include phenyl, naphthyl, and tetrahydronaphthyl.

Also, at least one hydrogen atom of the aryl group may be substituted with the same substituent groups as described above with reference to the alkyl group. In this regard, the term "aryl" includes a substituted aryl moiety.

As used herein, the term "arylalkyl" refers to an alkyl substituted with aryl. Examples of arylalkyl include benzyl or phenyl-$CH_2CH_2$-. At least one hydrogen of the arylalkyl may be substituted with the same substituent groups as described above with reference to the alkyl group. In this regard, the term "arylalkyl" includes a substituted arylalkyl moiety.

As used herein, the term "aryloxy" refers to -O-aryl, and examples of the aryloxy include phenoxy. At least one hydrogen atom of the aryloxy group may be substituted with the same substituent groups as described above with reference to the alkyl group. In this regard, the term "aryloxy" includes a substituted aryloxy moiety.

As used herein, the term "heteroaryl" refers to a monocyclic or a bicyclic organic compound including at least one heteroatom selected from N, O, P, or S, and carbon as the remaining ring atoms. The heteroaryl group, for example, may include 1 to 5 hetero atoms, or 5 to 10 ring members, wherein S or N may be oxidized to various oxidation states.

At least one hydrogen atoms of the heteroaryl group may be substituted with the same substituent groups as described above with reference to the alkyl group. In this regard, the term "heteroaryl" includes a substituted heteroaryl moiety.

As used herein, the term "heteroarylalkyl" refers to an alkyl substituted with heteroaryl. At least one hydrogen of the heteroarylalkyl may be substituted with the same substituent groups as described above with reference to the alkyl group. In this regard, the term "heteroarylalkyl" includes a substituted heteroarylalkyl moiety.

As used herein, the term "heteroaryloxy" refers to -O-heteroaryl moiety. At least one hydrogen atom of the heteroaryloxy group may be substituted with the same substituent groups as described above with reference to the alkyl group. In this regard, the term "heteroaryloxy" includes a substituted heteroaryloxy moiety.

As used herein, the term "heteroaryloxyalkyl" refers to an alkyl substituted with heteroaryloxy. At least one hydrogen atom of the heteroaryloxyalkyl group may be substituted with the same substituent groups as described above with reference to the alkyl group. In this regard, the term "heteroaryloxyalkyl" includes a substituted heteroaryloxyalkyl moiety.

As used herein, the term "carbocyclic" refers to a fully or partially saturated or unsaturated non-aromatic monocyclic, bicyclic, or tricyclic hydrocarbon.

Examples of the monocyclic hydrocarbon may include cyclopentyl, cyclopentenyl, cyclohexyl, cyclohexyl, and cyclohexenyl; and examples of the bicyclic hydrocarbon may include bornyl, decahydronaphthyl, bicyclo[2.1.1]hexyl, bicyclo[2.2.1]heptyl, bicyclo[2.2.1]heptenyl, or bicyclo[2.2.2]octyl.

Examples of the tricyclic hydrocarbon may include adamantyl.

At least one hydrogen atom of the carbocyclic group may be substituted with the same substituent groups as described above with reference to the alkyl group. In this regard, the term "carbocyclic" includes a substituted carbocyclic moiety.

As used herein, the term "carbocyclicoxy" refers to -O-carbocyclic moiety. At least one hydrogen atom of the carbocyclicoxy group may be substituted with the same substituent groups as described above with reference to the alkyl group. In this regard, the term "carbocyclicoxy" includes a substituted carbocyclicoxy moiety.

As used herein, the term "carbocyclicoxyalkyl" refers to a carbocyclic group substituted by the alkoxy group described above. At least one hydrogen atom of the carbocyclicoxyalkyl may be substituted with the same substituent

groups as described above with reference to the alkyl group. In this regard, the term "carbocyclicoxyalkyl" includes a substituted carbocyclicoxyalkyl moiety.

As used herein, the term "heterocyclic" refers to a 5-to 10-membered ring group including a hetero atom, such as nitrogen, sulfur, phosphorus, or oxygen, and examples of the heteroring group may include pyridyl. At least one hydrogen atom of the heterocyclic group may be substituted with the same substituent groups as described above with reference to the alkyl group.

As used herein, the term "heterocyclicoxy" refers to a -O-heterocyclic group, and at least one hydrogen atom of the heterocyclicoxy group may be substituted with the same substituent groups as described above with reference to the alkyl group.

As used herein, the term "heterocyclicoxyalkyl" refers to a heterocyclic group substituted by the alkoxy group described above. At least one hydrogen atom of the heterocyclicoxyalkyl may be substituted with the same substituent groups as described above with reference to the alkyl group. In this regard, the term "heterocyclicoxyalkyl" includes a substituted heterocyclicoxyalkyl moiety.

As used herein, the term "sulfonyl" refers to R"-$SO_2$-, wherein R" is a hydrogen, alkyl, aryl, heteroaryl, aryl-alkyl, heteroaryl-alkyl, alkoxy, aryloxy, cycloalkyl group, or heterocyclic group.

As used herein, the term "sulfamoyl" refers to $H_2NS(O_2)$-, alkyl-$NHS(O_2)$-, (alkyl)$_2NS(O_2)$- aryl- $NHS(O_2)$-, alkyl-(aryl)-$NS(O_2)$-, (aryl)$_2NS(O)_2$, heteroaryl-$NHS(O_2)$-, (aryl-alkyl)- $NHS(O_2)$-, or (heteroaryl-alkyl)-$NHS(O_2)$-.

At least one hydrogen atom of the sulfamoyl group may be substituted with the same substituent groups as described above with reference to the alkyl group.

As used herein, the term "amino" refers to a nitrogen atom covalently bonded to at least one carbon or a hetero atom. An amino group includes, for example, -$NH_2$ and substituted moieties. Also, an amino group includes "alkylamino" in which a nitrogen atom is bonded to at least one additional alkyl group, or "diarylamino" in which nitrogen is bonded to at least one or two independently selected aryl groups.

Alkylene, arylene, and heteroarylene denote divalent groups derived from alkyl, aryl, and heteroaryl group, respectively.

When a group containing a specified number of carbon atoms is substituted with any of the groups listed in the preceding paragraph, the number of carbon atoms in the resulting "substituted" group is defined as the sum of the carbon atoms contained in the original (unsubstituted) group and the carbon atoms (if any) contained in the substituent. For example, when the term "substituted C1-C30 alkyl" refers to a C1-C30 alkyl group substituted with C6-C30 aryl group, the total number of carbon atoms in the resulting aryl substituted alkyl group is C7-C60.

A C rate is a discharge rate of a cell, and is obtained by dividing a total capacity of the cell by a total discharge period of time, e.g., a C rate for a battery having a discharge capacity of 1.6 ampere-hours would be 1.6 amperes.

Hereinafter, the electrolyte and the lithium metal battery according to exemplary embodiments of the present disclosure are described in more detail through the following Examples and Comparative Preparation Examples. However, such embodiments are provided for illustrative purposes only, and the scope of the present disclosure should not be limited thereto in any manner. Further, it should be understood that the present disclosure is not limited to the above descriptions since other various modifications of the present disclosure may be apparent to persons having ordinary knowledge in the related art pertinent to the present disclosure.

## EXAMPLES

### Preparation Example 1: Preparation of liquid electrolyte

Lithium bis(fluorosulfonyl)imide (LiFSI) as a lithium salt was mixed with ethylene glycol dimethyl ether (1,2-dimethoxyethane) (DME) and 1,1,2,2-tetrafluoroethyl-2,2,3,3-tetrafluoropropyl ether (TTE) at a volume ratio of 20:80 to prepare a 1 molar (M) solution of the lithium salt, and thus a liquid electrolyte was prepared by adding 0.5 part by weight of N-butyl-N-methylpyrrolidinium bis(fluorosulfonyl)imide (Pyr14FSI) thereto based on 100 parts by weight of an organic solvent as an additive to improve a deposition density.

### Preparation Example 2: Preparation of liquid electrolyte

A liquid electrolyte was prepared in the same manner as in Preparation Example 1, except that 0.5 part by weight of N-butyl-N-methylpyrrolidinium bis(trifluoromethanesulfonyl)imide (Pyr14TFSI) was added as an ionic liquid.

### Preparation Example 3: Preparation of liquid electrolyte

A liquid electrolyte was prepared in the same manner as in Preparation Example 1, except that 5 part by weight of N-butyl-N-methylpyrrolidinium bis(trifluoromethanesulfonyl)imide (Pyr14TFSI) was added as an ionic liquid.

Comparative Preparation Example 1: Preparation of liquid electrolyte

A liquid electrolyte was prepared in the same manner as in Preparation Example 1, except that an ionic liquid was not added.

Comparative Preparation Example 2: Preparation of liquid electrolyte

A liquid electrolyte was prepared in the same manner as in Preparation Example 1, except that 0.5 part by weight of 1-ethyl-3-methylimidazolium-bis(trifluoromethylsulfonyl)imide (EMITFSI) was added as an ionic liquid.

Comparative Preparation Example 3: Preparation of liquid electrolyte

A liquid electrolyte was prepared in the same manner as in Preparation Example 1, except that 0.5 part by weight of N-propyl-N-methylpyridinium bis(fluorosulfonyl)imide (PPFSI) was added as an ionic liquid.

Comparative Preparation Example 4: Preparation of liquid electrolyte

A liquid electrolyte was prepared in the same manner as in Preparation Example 1, except that 0.5 part by weight of N-methyl-N-propylpyrrolidinium bis(fluorosulfonyl)imide (Pyr13FSI) was added as an ionic liquid.

Comparative Preparation Example 5: Preparation of liquid electrolyte

A liquid electrolyte was prepared in the same manner as in Preparation Example 1, except that 0.5 part by weight of N-methyl-N-propylpyrrolidinium bis(trifluoromethanesulfonyl)imide (Pyr13TFSI) was added as an ionic liquid.

Comparative Preparation Example 6: Preparation of liquid electrolyte

A liquid electrolyte was prepared in the same manner as in Preparation Example 1, except that 0.5 part by weight of N-methoxyethyl-N-methylpyrrolidinium bis(trifluoromethanesulfonyl)imide ($PYR_{12O1}TFSI$) was added as an ionic liquid.

Comparative Preparation Example 7: Preparation of liquid electrolyte

A liquid electrolyte was prepared in the same manner as in Preparation Example 1, except that 10 parts by weight of N--butyl-N-methylpyrrolidinium bis (trifluoromethanesulfonyl)imide (Pyr14TFSI) was added as an ionic liquid.

Evaluation Example 1: Gel permeation chromatography (GPC) analysis

A gel permeation chromatography (GPC) was performed on liquid electrolytes prepared in Preparation Example 2 and Comparative Preparation Examples 1 and 5. A GPC analysis device was Waters APC Acquity, and the system used for the analysis was Acquity APC XT45 x 3ea (4.6 x 150 millimeters (mm), 45A), and the chromatography was detected by an eluent of THF at UV of 254 nanometers (nm).

The results of the GPC analysis performed on the liquid electrolytes prepared in Preparation Example 2 and Comparative Preparation Examples 1 and 5 are shown in FIG. 2. As shown in FIG. 2, the liquid electrolyte including a pyrrolidinium ionic liquid had a reduced time for an eluent period, and this refers to an increase in volume solvation of lithium in the presence of the pyrrolidinium ionic liquid. Also, this indicates that when a length of chain increases, a volume solvation of lithium increases as well.

Evaluation Example 2: Deposition density measurement

Test cells for measuring a deposition density of a lithium deposition layer formed by liquid electrolytes prepared in Preparation Examples 1 to 3 and Comparative Preparation Examples 1 to 7 were prepared as follows.

A 2-electrode cell of lithium-copper was prepared by disposing a polyethylene/polypropylene separator between a lithium metal electrode (having a thickness of about 20 micrometers ($\mu$m)) and a copper metal electrode (having a thickness of about 15 $\mu$m) and adding each of liquid electrolytes prepared in Preparation Examples 1 to 3 and Comparative Preparation Examples 1 to 7.

Li ions were deposited on a Cu electrode surface by using a constant current method, and a density of a lithium deposition layer was measured. Under a constant current condition, a thickness of the deposition layer was measured

in micrometers, and an SEM image cross-sectional view analysis was conducted after depositing Li at a current density of 0.43 milliampere per square centimeter (mA/cm$^2$) for 1 hour and at 4.3 mA/cm$^2$ for 1 hour on the Cu electrode.

The SEM images of cross-sectional views of the lithium deposition layers when the electrolytes prepared in Comparative Preparation Example 1 and Preparation Example 2 are shown in FIGS. 3 and 4, respectively.

As shown in FIGS. 3 and 4, when the pyrrolidinium ionic liquid is added, a thin and compact deposition layer is formed.

Also, a deposition density was calculated by using the thickness of the disposition layer measured in the micrometers and a ratio of a thicknesses and a theoretical density of the deposition layer. The deposition density (%) of the deposition layer was calculated by following Equation 1. The results of the deposition density calculated by following Equation 1 are shown in Table 1.

Equation 1

$$\rho_d = \frac{d_{th}}{d_{re}} \times 100$$

wherein,

$\rho_d$ is a deposition density (percent, %) with respect to a lithium theoretical density of the lithium deposition layer,
$d_{th}$ is a theoretical thickness of the lithium deposition layer,
$d_{re}$ is an actual thickness of the lithium deposition layer, and
$d_{th}$ is calculated according to Equation 2:

Equation 2

$$d_{th} = \frac{C_d}{C_{th}} \times \frac{1}{\rho_{th} A}$$

wherein,

$C_{th}$ is a theoretical capacity of a lithium metal, which is 3,860 milliampere hours per gram (mAh/g),
$\rho_{th}$ is a theoretical density of a lithium metal, which is 0.53 grams per cubic centimeter (g/cc),
$A$ is a deposition area (square centimeters, cm$^2$), and
$C_d$ is a deposition capacity (milliampere hours, mAh).

Table 1

| Liquid electrolyte | Deposition thickness (μm) | Deposition layer density (g/cc) | Deposition density vs lithium theoretical density (%) |
|---|---|---|---|
| Preparation Example 1 | 38.5 | 0.180 | 34.0% |
| Preparation Example 2 | 37 | 0.187 | 35.4% |
| Preparation Example 3 | 40 | 0.173 | 32.7% |
| Comparative Preparation Example 1 | 48 | 0.144 | 27.3% |
| Comparative Preparation Example 2 | 45 | 0.144 | 29.1% |
| Comparative Preparation Example 3 | 50 | 0.144 | 26.2% |
| Comparative Preparation Example 4 | 59 | 0.118 | 22.2% |

(continued)

| Liquid electrolyte | Deposition thickness (μm) | Deposition layer density (g/cc) | Deposition density vs lithium theoretical density (%) |
|---|---|---|---|
| Comparative Preparation Example 5 | 49 | 0.147 | 26.7% |
| Comparative Preparation Example 6 | 60 | 0.180 | 21.8% |
| Comparative Preparation Example 7 | 38 | 0.182 | 34.4% |

As shown in Table 1, when an ionic liquid having a pyrrolidinium cation is added, a deposition density is relatively increased compared to the case when an ionic liquid having an imidazolium or piperidinium cation is added. Also, it was confirmed that, regardless of a type of an anion (FSI, TFSI), Pyr14, as a pyrrolidinium cation having 4 carbon atoms, improved a deposition density has been observed.

Example 1: Preparation of lithium metal battery

$LiCoO_2$, a conducting agent (Super-P; Timcal Ltd.), polyvinylidene fluoride (PVdF), and N-methylpyrrolidone were mixed to prepare a positive electrode composition. A mixing weight ratio of $LiCoO_2$, the conducting agent, PVdF, and N-methylpyrrolidone in the positive electrode composition was 97:1.5:1.5.

The positive electrode composition was coated on a top of an aluminum foil (having a thickness of about 15 μm) dried at 25°C, and the resultant was dried in vacuum at 110°C to prepare a positive electrode.

A polyethylene/polypropylene separator was disposed between the positive electrode thus obtained and a lithium metal negative electrode (having a thickness of about 20 μm) to prepare a lithium metal battery (a coin cell), and the liquid electrolyte prepared in Preparation Example 1 was added thereto.

Examples 2 and 3: Preparation of lithium metal batteries

Lithium metal batteries were prepared in the same manner as in Example 1, except that the liquid electrolytes of Preparation Examples 2 and 3 were used instead of the liquid electrolyte of Preparation Example 1.

Comparative Examples 1 to 7: Preparation of lithium metal batteries

Lithium metal batteries were prepared in the same manner as in Example 1, except that the liquid electrolytes of Comparative Preparation Examples 1 to 7 were used instead of the liquid electrolyte of Preparation Example 1.

Evaluation Example 3: Deposition density measurement

Lithium was deposited on the lithium metal negative electrodes prepared in Comparative Example 1 and Example 2 for 11 hours at 0.43 $mA/cm^2$, deposition density values thereof were measured, and the results are shown in Table 2. The deposition densities were calculated by aforementioned Equation 1.

Table 2

| | Deposition density |
|---|---|
| Comparative Example 1 | 29 % |
| Example 1 | 34 % |

Also, an SEM image of the deposition layer of Comparative Example 1 is shown in FIGS. 5A and 5B; and the deposition layer of Example 2 is shown in FIGS. 6A and 6B.

As shown in Table 2, FIGS. 5A and 5B, and FIGS. 6A and 6B, when Pyr14TFSI ionic liquid is added, as well as in the case of the test cell using the Cu electrode, under the actual operation conditions, it may be confirmed that the deposition density improves. Also, as the surface analysis of the SEM image shows, tightness was observed as porosity of the lithium deposition layer recued.

Evaluation Example 4: Charging/discharging characteristics

The lithium metal batteries of Examples 1 and 2 and Comparative Examples 1, 2, 3, and 5 were charged/discharged under the conditions as follows, and changes in charging/discharging characteristics per cycle were measured. The results are shown in FIG. 7.

Constant current charging processes of the lithium metal batteries were performed to a current of about 0.1C rate at about 25°C until a voltage reached about 4.30 volts (V) (vs. Li), and then the lithium metal batteries passing through the constant current charging processes were cutoff at a current of about 0.05C rate while maintaining the voltage of about 4.30 V in a constant voltage mode. Subsequently, the cutoff lithium metal batteries were discharged to a constant current of about 0.1C rate until the voltage reached about 2.8 V (vs. Li) during discharging (the first cycle in the chemical conversion step). Such charging and discharging process was performed for two more cycles to complete the chemical conversion step.

After the chemical conversion step, the lithium metal batteries were charged with a constant current of i) about 0.5C rate or ii) 1C rate at about room temperature (25°C) in a voltage range of about 3.0 V to about 4.4 V, and then the lithium metal batteries passing through the constant current discharging processes were performed to a constant current of about 0.2C rate by a current of about 0.72 mA until the voltage reached about 4.4 V of a cutoff voltage.

The charging and discharging process was performed for 99 more cycles to complete the total of 100 cycles.

As shown in FIG. 7, it may be confirmed that when the pyrrolidinium ionic liquid is added, lifespan stability of the battery improved.

Evaluation Example 5: Impedance measurement

Resistances of the lithium metal batteries prepared in Comparative Example 1 and Examples 1 and 2 were measured by using an impedance analyzer (Solartron 1260A Impedance/Gain-Phase Analyzer) using a 2-probe method at 25°C. An amplitude was ± 10 millivolts (mV), and a frequency range was about 0.1 Hertz (Hz) to about 1 megaHertz (MHz).

The lithium metal batteries prepared in Comparative Example 1 and Examples 1 and 2 were charged and discharged in the same manner as described in Evaluation Example 4, and the impedance measurement results after the first cycle and the $100^{th}$ cycle of the Nyquist plots are shown in FIGS. 8 and 9. The interfacial resistances of the electrode shown in FIGS. 8 and 9 are determined by locations and sized of the semicircle. The difference between a left x-intercept and a right x-intercept of the semicircle denotes an interfacial resistance of the electrode.

As shown in FIGS. 8 and 9, it may be confirmed that when the pyrrolidinium ionic liquid is added, the interfacial resistance is reduced as the number of cycles increases. In this regard, it may be known that interfacial stability increases by addition of the pyrrolidinium ionic liquid.

Evaluation Example 6: Characteristic analysis according to addition amount of ionic liquid

(1) Charging/discharging characteristic evaluation

The lithium metal batteries of Comparative Examples 1 and 7 and Examples 2 and 3 2343 charged and discharged in the same manner as described in Evaluation Example 4, and changes in discharge capacities per cycle are shown in FIG. 10.

Also, the results of evaluating initial capacities and capacity retention ratios at $50^{th}$ cycle of the lithium metal batteries are shown in Table 3. The capacity retention ratio may be calculated by following Equation 3.

Equation 3

$$\text{Capacity retention ratio (\%)} = (\text{Discharge capacity at } 50^{th} \text{ cycle} / \text{discharge capacity at } 1^{st} \text{ cycle}) \times 100$$

Table 3

| | Initial capacity (mAh) | Capacity retention ratio at 50th cycle |
|---|---|---|
| Comparative Example 1 | 132.4 | 96% |
| Example 2 | 127.7 | 99.5% |

(continued)

| | Initial capacity (mAh) | Capacity retention ratio at 50th cycle |
|---|---|---|
| Example 3 | 132.4 | 95% |
| Comparative Example 7 | 117 | 87% |

As shown in FIG.10 and Table 3, when Pyr14TFSI was increased to 10 percent by weight (wt%), it may be seen that the lifespan rapidly decreased after the $30^{th}$ cycle. Thus, an additive for improving a deposition density needs to be maintained at an amount of 3 parts by weight or lower.

(2) Impedance evaluation

The lithium metal batteries of Comparative Examples 1 and 7 and Example 2 were charged and discharged for 50 cycles, and impedances thereof were measured in the same manner as described in Evaluation Example 4. The results are shown in FIG. 11.

As shown in FIG. 11, when Pyr14TFSI was increased to 10 wt%, it may be seen that a surface resistance increases, and thus an interfacial stability decreases.

As described above, a lithium metal battery according to the one or more of the above embodiments includes an ionic liquid for improving a deposition density, which increases an energy density during charging by increasing a density of a lithium deposition layer at a surface of a lithium metal negative electrode, and thus a side reaction of a liquid electrolyte is minimized during charging/discharging so that lifespan characteristics of the battery may improve.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the present disclosure as defined by the following claims.

## Claims

**1.** A lithium metal battery comprising:

a lithium metal negative electrode;
a positive electrode; and
a liquid electrolyte disposed between the lithium metal negative electrode and the positive electrode,wherein the liquid electrolyte comprises:

an ionic liquid comprising a cation represented by Formula 1 and an anion, and
an organic solvent:

Formula 1

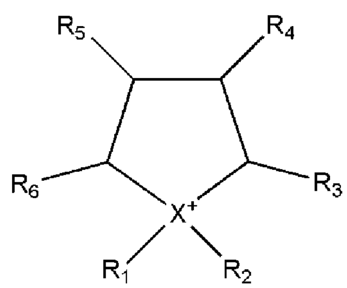

wherein in Formula 1,

X is N, P, or As;

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ comprises 4 or more carbon atoms; and

$R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30 alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30 heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a substituted or unsubstituted C2-C30 heterocyclic group, or a substituted or unsubstituted C3-C30 heterocyclicalkyl group, a substituted or unsubstituted C2-C30 heterocyclicoxy group, or a substituted or unsubstituted C3-C30 heterocyclicoxyalkyl group;

wherein, a substituted alkyl group, alkenyl group, alkynyl group, aryl group, alkoxy group, alkoxyalkyl group, aryloxy group, aryloxyalkyl group, arylalkyl group, heteroaryl group, heteroaryloxy group, heteroarylalkyl group, carbocyclic group, carbocyclicalkyl group, carbocyclicoxy group, carbocyclicoxyalkyl group, heterocyclic group, heterocyclicalkyl group, heterocyclicoxy group or heterocyclicoxyalkyl group indicates that the group is substituted with a halogen atom, a C1-C20 alkyl group substituted with a halogen atom, a C1-C20 alkoxy group, a C2-C20 alkoxyalkyl group, a hydroxy group, a nitro group, a cyano group, an amino group, an amidino group, a hydrazine group, a hydrazone group, a carboxylic acid or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C6-C20 heteroaryloxy group, or a C6-C20 heteroaryloxyalkyl group; and

wherein the amount of the cation of the ionic liquid is from greater than 0 parts by weight to 3 parts by weight, based on 100 parts by weight of the organic solvent.

2. The lithium metal battery of claim 1, wherein the cation is a pyrrolidinium cation represented by Formula 2:

Formula 2

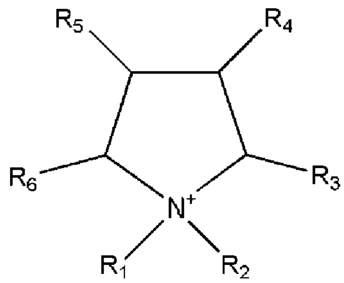

wherein in Formula 2,

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ comprises 4 or more carbon atoms; and

$R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30 alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30

heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a substituted or unsubstituted C2-C30 heterocyclic group, or a substituted or unsubstituted C3-C30 heterocyclic alkyl group, a substituted or unsubstituted C2-C30 heterocyclicoxy group, or a substituted or unsubstituted C3-C30 heterocyclicoxyalkyl group;
preferably wherein the cation is a pyrrolidinium cation represented by Formula 2a:

Formula 2a

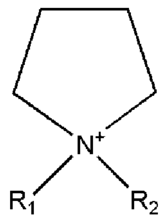

wherein in Formula 2a,

$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ comprises 4 or more carbon atoms;
wherein, a substituted alkyl group, alkenyl group, alkynyl group, aryl group, alkoxy group, alkoxyalkyl group, aryloxy group, aryloxyalkyl group, arylalkyl group, heteroaryl group, heteroaryloxy group, heteroarylalkyl group, carbocyclic group, carbocyclicalkyl group, carbocyclicoxy group, carbocyclicoxyalkyl group, heterocyclic group, heterocyclicalkyl group, heterocyclicoxy group or heterocyclicoxyalkyl group indicates that the group is substituted with a halogen atom, a C1-C20 alkyl group substituted with a halogen atom, a C1-C20 alkoxy group, a C2-C20 alkoxyalkyl group, a hydroxy group, a nitro group, a cyano group, an amino group, an amidino group, a hydrazine group, a hydrazone group, a carboxylic acid or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C6-C20 heteroaryloxy group, or a C6-C20 heteroaryloxyalkyl group.

3. The lithium metal battery of claim 1 or 2, wherein at least one hydrogen atom of $R_1$ to $R_6$ is substituted with a halogen atom, a C1-C20 alkyl group substituted with a halogen atom, a C1-C20 alkoxy group, a C2-C20 alkoxyalkyl group, a hydroxyl group, a nitro group, a cyano group, an amino group, an amidino group, a hydrazine group, a hydrazone group, a carboxylic acid or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C7-C20 heteroarylalkyl group, a C6-C20 heteroaryloxy group, a C6-C20 heteroaryloxyalkyl group, or a C6-C20 heteroarylalkyloxy group.

4. The lithium metal battery of claim 1, wherein the cation comprises at least one selected from N-butyl-N-methylpyrrolidinium, N-methyl-N-pentylpyrrolidinium, N-hexyl-N-methylpyrrolidinium, N-heptyl-N-methylpyrrolidinium, N-methyl-N-octylpyrrolidinium, N-methyl-N-nonylpyrrolidinium, N-decyl-N-methylpyrrolidinium, N-methyl-N-undecylpyrrolidinium, N-dodecyl-N-methylpyrrolidinium, N-methyl-N-tridecylpyrrolidinium, N-methyl-N-tetradecylpyrrolidinium, N-methyl-N-pentadecylpyrrolidinium, N-hexadecyl-N-methylpyrrolidinium, N-heptadecyl-N-methylpyrrolidinium, N-methyl-N-octadecylpyrrolidinium, N-methyl-N-nonadecylpyrrolidinium, N-eicosyl-N-methylpyrrolidinium, N-butyl-N-ethylpyrrolidinium, N-butyl-N-propylpyrrolidinium, N,N-dibutylpyrrolidinium, N-butyl-N-pentylpyrrolidinium, N-butyl-N-hexylpyrrolidinium, N-butyl-N-heptylpyrrolidinium, N-butyl-N-octylpyrrolidinium, N-butyl-N-nonylpyrrolidinium, and N-butyl-N-decylpyrrolidinium.

5. The lithium metal battery of any of claims 1-4, wherein the amount of the cation of the ionic liquid is from greater than 0 parts by weight to 2 parts by weight, based on 100 parts by weight of the organic solvent.

**6.** The lithium metal battery of any of claims 1-5, wherein the anion is at least one selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N^-$, and $(CF_3SO_2)_2N^-$.

**7.** The lithium metal battery of any of claims 1-6, wherein the organic solvent comprises an ether solvent, preferably wherein the organic solvent comprises:

an ether solvent in which lithium ions are solvated, and
a fluorine-substituted ether solvent represented by Formula 3:

Formula 3 $R\text{-}\{O(CH_2)_a\}_b\text{-}CH_2\text{-}O\text{-}C_nF_{2n}H$

wherein in Formula 3,

R is a of the formula $C_mF_{2m}H$ or $C_mF_{2m+1}$,
n is an integer of 2 or greater,
m is an integer of 1 or greater,
a is an integer of 1 or 2, and
b is 0 or 1.

**8.** The lithium metal battery of claim 7, wherein an amount of the fluorine-substituted ether solvent represented by Formula 3 is greater than an amount of the ether solvent in which lithium ions are solvated, preferably wherein an amount of the ether solvent in which lithium ions are solvated is in a range of 15 percent by volume to about 45 by volume, and the amount of the fluorine-substituted ether solvent represented by Formula 3 is in a range of 55 percent by volume to 85 percent by volume.

**9.** The lithium metal battery of claim 7 or 8, wherein the fluorine-substituted ether solvent is a compound represented by Formula 4:

Formula 4 $R\text{-}CH_2\text{-}O\text{-}C_nF_{2n}H$

wherein in Formula 4, R is $C_{m+1}H_mF_{2m}$ or $C_mF_{2m+1}$,
n is an integer of 2 to 5, and
m is an integer of 1 to 5;
preferably wherein the fluorine-substituted ether solvent represented by Formula 4 is at least one selected from $HCF_2CF_2CH_2OCF_2CF_2H$, $HCF_2CF_2CH_2OCF_2CF_2CF_2CF_2H$, $HCF_2CF_2OCH_2CF_3$, $HCF_2CF_2OCH_2CH_2OCF_2CF_2H$, $HCF_2CF_2OCH_2CH_2CH_2OCF_2CF_2H$, $HCF_2CF_2CH_2OCF_2CF_2CF_2H$, $HCF_2CF_2OCH_2CH_2OCF_2CF_2CF_2H$, and $HCF_2CF_2OCH_2CH_2CH_2OCF_2CF_2CF_2H$.

**10.** The lithium metal battery of any of claims 7-9, wherein the ether solvent in which lithium ions are solvated is a glyme solvent and/or wherein the ether solvent in which lithium ions are solvated is at least one selected from ethylene glycol dimethyl ether, ethylene glycol diethyl ether, propylene glycol dimethyl ether, propylene glycol diethyl ether, butylene glycol dimethyl ether, butylene glycol diethyl ether, diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, dipropylene glycol dimethyl ether, tripropylene glycol dimethyl ether, tetrapropylene glycol dimethyl ether, dipropylene glycol diethyl ether, tripropylene glycol diethyl ether, tetrapropylene glycol diethyl ether, dibutylene glycol dimethyl ether, tributylene glycol dimethyl ether, tetrabutylene glycol dimethyl ether, dibutylene glycol diethyl ether, tributylene glycol diethyl ether, tetrabutylene glycol diethyl ether, poly(ethyleneglycol) dilaurate, poly(ethyleneglycol) monoacrylate, and poly(ethyleneglycol) diacrylate.

**11.** The lithium metal battery of any of claims 1-10, wherein the organic solvent further comprises at least one selected from ethylene carbonate, propylene carbonate, dimethyl carbonate, diethyl carbonate, butylene carbonate, ethylmethyl carbonate, fluoroethylene carbonate, methylpropyl carbonate, ethylpropyl carbonate, methylisopropyl carbonate, dipropyl carbonate, dibutyl carbonate, gamma butyrolactone, dimethylene glycol dimethyl ether, trimethylene glycol dimethyl ether, tetraethylene glycol dimethyl ether, polyethylene glycol dimethyl ether, succinonitrile, dimethyl sulfone, ethylmethyl sulfone, diethyl sulfone, adiponitrile, 1,1,2,2-tetrafluoroethyl-2,2,3,3-tetrafluoropropyl ether,

2,3,3,4,4,5,5-octafluoropentyl-1,1,2,2-tetrafluoroethyl ether, benzonitrile, acetonitrile, tetrahydrofuran, 2-methyltetrahydrofuran, dioxolane, 4-methyldioxolane, N,N-dimethylformamide, N,N-dimethylacetamide, dimethyl sulfoxide, dioxane, sulfolane, dichloroethane, chlorobenzene, and nitrobenzene.

**12.** The lithium metal battery of any of claims 1-11, wherein the electrolyte further comprises at least one lithium salt selected from LiSCN, $LiN(CN)_2$, $LiClO_4$, $LiBF_4$, $LiAsF_6$, $LiPF_6$, $LiCF_3SO_3$, $Li(CF_3SO_2)_2N$, $Li(CF_3SO_2)_3C$, $LiSbF_6$, $Li(FSO_2)_2N$, $LiC_4F_9SO_3$, $LiN(SO_2CF_2CF_3)_2$, $LiSbF_6$, $LiPF_3(CF_2CF_3)_3$, $LiPF_3(C_2F_5)_3$, $LiPF_3(CF_3)_3$, LiCl, LiF, LiBr, LiI, $LiB(C_2O_4)_2$ and lithium difluoro(oxalato)borate.

**13.** The lithium metal battery of claim 12, wherein an amount of the lithium salt is in a range of 0.1 mole per liter to 7 moles per liter.

**14.** The lithium metal battery of any of claims 1-13, further comprising a lithium deposition layer disposed on a surface of the lithium metal negative electrode, preferably wherein a deposition density of the lithium deposition layer calculated according to Equation 1 is 30% or greater:

Equation 1

$$\rho_d = \frac{d_{th}}{d_{re}} \times 100$$

wherein

$\rho_d$ is a deposition density with respect to a lithium theoretical density of the lithium deposition layer,
$d_{th}$ is a theoretical thickness of the lithium deposition layer,
$d_{re}$ is an actual thickness of the lithium deposition layer, and
$d_{th}$ is calculated according to Equation 2:

Equation 2

$$d_{th} = \frac{C_d}{C_{th}} \times \frac{1}{\rho_{th} A}$$

wherein

$C_{th}$ is a theoretical capacity of a lithium metal, which is 3,860 milliampere hours per gram,
$\rho_{th}$ is a theoretical density of a lithium metal, which is 0.53 grams per cubic centimeter, $A$ is a deposition area expressed in square centimeters, and
$C_d$ is a deposition capacity expressed in milliampere hours.

**15.** A method of manufacturing a lithium metal battery, the method including:

providing a positive electrode having a positive active material disposed thereon;
providing a lithium metal negative electrode;
disposing a separator between the positive electrode and the lithium metal negative electrode;
disposing the positive electrode, the separator, and the negative electrode in a battery case; and
adding a liquid electrolyte to the cell case such that it contacts the positive electrode, the lithium metal negative electrode, and a separator to manufacture the lithium metal battery,
wherein the liquid electrolyte includes
an ionic liquid including a cation represented by Formula 1 and an anion, and
an organic solvent:

Formula 1

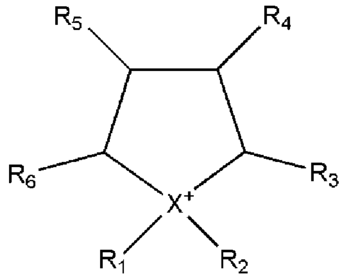

wherein in Formula 1,

X is N, P, or As;
$R_1$ and $R_2$ are each independently a hydrogen, a substituted or unsubstituted C1-C30 alkyl group, a substituted or unsubstituted C4-C30 carbocyclic group, a substituted or unsubstituted C5-C30 carbocyclicalkyl group, or a substituted or unsubstituted C2-C30 alkenyl group, wherein at least one of $R_1$ and $R_2$ includes 4 or more carbon atoms; and
$R_3$ to $R_6$ are each independently a hydrogen atom, a halogen atom, a cyano group, a substituted or unsubstituted C1-C30 alkyl group, a substituted or unsubstituted C2-C30 alkenyl group, a substituted or unsubstituted C2-C30 alkynyl group, a substituted or unsubstituted C6-C30 aryl group, a substituted or unsubstituted C1-C30 alkoxy group, a substituted or unsubstituted C2-C30 alkoxyalkyl group, a substituted or unsubstituted C6-C30 aryloxy group, a substituted or unsubstituted C7-C30 aryloxyalkyl group, a substituted or unsubstituted C7-C30 arylalkyl group, a substituted or unsubstituted C2-C30 heteroaryl group, a substituted or unsubstituted C2-C30 heteroaryloxy group, a substituted or unsubstituted C3-C30 heteroarylalkyl group, a substituted or unsubstituted C4-C30 carbocyclic group, a substituted or unsubstituted C5-C30 carbocyclicalkyl group, a substituted or unsubstituted C4-C30 carbocyclicoxy group, a substituted or unsubstituted C5-C30 carbocyclicoxyalkyl group, a substituted or unsubstituted C2-C30 heterocyclic group, or a substituted or unsubstituted C3-C30 heterocyclicalkyl group, a substituted or unsubstituted C2-C30 heterocyclicoxy group, or a substituted or unsubstituted C3-C30 heterocyclicoxyalkyl group;

wherein, a substituted alkyl group, alkenyl group, alkynyl group, aryl group, alkoxy group, alkoxyalkyl group, aryloxy group, aryloxyalkyl group, arylalkyl group, heteroaryl group, heteroaryloxy group, heteroarylalkyl group, carbocyclic group, carbocyclicalkyl group, carbocyclicoxy group, carbocyclicoxyalkyl group, heterocyclic group, heterocyclicalkyl group, heterocyclicoxy group or heterocyclicoxyalkyl group indicates that the group is substituted with a halogen atom, a C1-C20 alkyl group substituted with a halogen atom, a C1-C20 alkoxy group, a C2-C20 alkoxyalkyl group, a hydroxy group, a nitro group, a cyano group, an amino group, an amidino group, a hydrazine group, a hydrazone group, a carboxylic acid or a salt thereof, a sulfonyl group, a sulfamoyl group, a sulfonic acid or a salt thereof, a phosphoric acid or a salt thereof, a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C6-C20 heteroaryloxy group, or a C6-C20 heteroaryloxyalkyl group; and
wherein the amount of the cation of the ionic liquid is from greater than 0 parts by weight to 3 parts by weight, based on 100 parts by weight of the organic solvent.

## Patentansprüche

1. Lithiummetall-Batterie, umfassend: eine negative Lithiummetall-Elektrode; eine positive Elektrode; und einen flüssigen Elektrolyt, der zwischen der negativen Lithiummetall-Elektrode und der positiven Elektrode angeordnet ist, wobei der flüssige Elektrolyt Folgendes umfasst:

eine ionische Flüssigkeit umfassend ein Kation, dargestellt durch Formel 1, und ein Anion und ein organische Lösungsmittel:

Formel 1

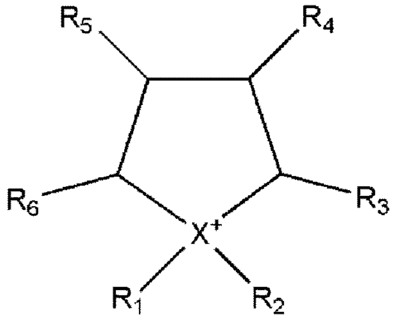

wobei in Formel 1,

X ist N, P oder As;
$R_1$ und $R_2$ sind jeweils unabhängig ein Wasserstoff, eine substituierte oder unsubstituierte C1-C30-Alkyl-Gruppe, eine substituierte oder unsubstituierte C4-C30-carbocyclische-Gruppe, eine substituierte oder unsubstituierte C5-C30-carbocyclische Alkyl-Gruppe, oder eine substituierte oder unsubstituierte C2- C30-Alkenyl-Gruppe, wobei mindestens eines von $R_1$ und $R_2$ 4 oder mehr Kohlenstoffatome umfasst; und
$R_3$ bis $R_6$ sind jeweils unabhängig ein Wasserstoffatom, eine Halogenatom, eine Cyano-Gruppe, eine substituierte oder unsubstituierte C1-C30-Alkyl-Gruppe, eine substituierte oder unsubstituierte C2-C30-Alkenyl-Gruppe, eine substituierte oder unsubstituierte C2-C30-Alkynyl-Gruppe, eine substituierte oder unsubstituierte C6-C30-Aryl-Gruppe, eine substituierte oder unsubstituierte C1-C30-Alkoxy-Gruppe, eine substituierte oder unsubstituierte C2-C30-Alkoxyalkyl-Gruppe, eine substituierte oder unsubstituierte C6-C30-Aryloxy-Gruppe, eine substituierte oder unsubstituierte C7-C30-Aryloxyalkyl-Gruppe, eine substituierte oder unsubstituierte C7-C30-Arylalkyl-Gruppe, eine substituierte oder unsubstituierte C2-C30-Heteroaryl-Gruppe, eine substituierte oder unsubstituierte C2-C30-Heteroaryloxy-Gruppe, eine substituierte oder unsubstituierte C3-C30-Heteroarylalkyl-Gruppe, eine substituierte oder unsubstituierte C4-C30-carbocyclische-Gruppe, eine substituierte oder unsubstituierte C5-C30-carbocyclische Alkyl-Gruppe, eine substituierte oder unsubstituierte C4-C30-carbocyclische Oxy-Gruppe, eine substituierte oder unsubstituierte C5-C30-carbocyclische Oxyalkyl-Gruppe, eine substituierte oder unsubstituierte C2-C30-heterocyclische Gruppe, oder eine substituierte oder unsubstituierte C3-C30-heterocyclische Alkyl-Gruppe, eine substituierte oder unsubstituierte C2-C30-heterocyclische Oxy-Gruppe oder eine substituierte oder unsubstituierte C3-C30-heterocyclische Oxyalkyl-Gruppe;

wobei, eine substituierte Alkyl-Gruppe, Alkenyl-Gruppe, Alkynyl-Gruppe, Aryl-Gruppe, Alkoxy-Gruppe, Alkoxyalkyl-Gruppe, Aryloxy-Gruppe, Aryloxyalkyl-Gruppe, Arylalkyl-Gruppe, Heteroaryl-Gruppe, Heteroaryloxy-Gruppe, Heteroarylalkyl-Gruppe, carbocyclische Gruppe, carbocyclische Alkyl-Gruppe, carbocyclische Oxy-Gruppe, carbocyclische Oxyalkyl-Gruppe, heterocyclische Gruppe, heterocyclische Alkyl-Gruppe, heterocyclische Oxy-Gruppe oder heterocyclische Oxyalkyl-Gruppe angibt, dass die Gruppe substituiert ist mit einem Halogenatom, einer C1-C20-Alkyl-Gruppe substituiert mit einem Halogenatom, einer C1-C20-Alkoxy-Gruppe, einer C2-C20-Alkoxyalkyl-Gruppe, einer Hydroxy-Gruppe, einer Nitro-Gruppe, einer Cyano-Gruppe, einer Amino-Gruppe, einer Amidino-Gruppe, einer Hydrazin-Gruppe, einer Hydrazon-Gruppe, einer carboxylischen Säure oder einem Salz davon, einer Sulfonyl-Gruppe, einer Sulfamoyl-Gruppe, einer Sulfonsäure oder einem Salz davon, einer Phosphorsäure oder einem Salz davon, einer Cl-C20-Alkyl-Gruppe, einer C2-C20-Alkenyl-Gruppe, einer C2-C20-Alkynyl-Gruppe, einer C1-C20-Heteroalkyl-Gruppe, einer C6-C20-Aryl-Gruppe, einer C6-C20-Arylalkyl-Gruppe, einer C6-C20-Heteroaryl-Gruppe, einer C6-C20-Heteroaryloxy-Gruppe, oder einer C6-C20-Heteroaryloxyalkyl-Gruppe; und wobei die
Menge des Kations der ionischen Flüssigkeit von größer als 0 Gewichtsanteile bis 3 Gewichtsanteile beruhend auf 100 Gewichtsanteilen des organischen Lösungsmittels ist.

**2.** Lithiummetall-Batterie nach Anspruch 1, wobei das Kation ein Pyrrolidinium-Kation ist, dargestellt durch Formel 2:

Formel 2

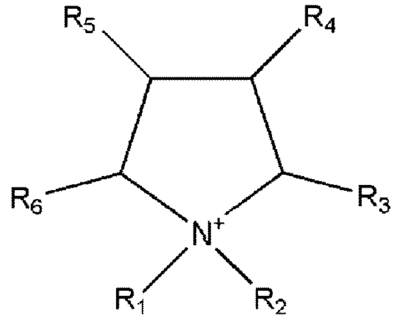

wobei in Formel 2,

$R_1$ und $R_2$ sind jeweils unabhängig ein Wasserstoff, eine substituierte oder unsubstituierte C1-C30-Alkyl-Gruppe, eine substituierte oder unsubstituierte C4-C30-carbocyclische Gruppe, eine substituierte oder unsubstituierte C5-C30-carbocyclische Alkyl-Gruppe oder eine substituierte oder unsubstituierte C2- C30-Alkenyl-Gruppe, wobei mindestens eines von $R_1$ und $R_2$ 4 oder mehr Kohlenstoffatome umfasst; und

$R_3$ bis $R_6$ sind jeweils unabhängig ein Wasserstoffatom, eine Halogenatom, eine Cyano-Gruppe, eine substituierte oder unsubstituierte C1-C30-Alkyl-Gruppe, eine substituierte oder unsubstituierte C2-C30-Alkenyl-Gruppe, eine substituierte oder unsubstituierte C2-C30-Alkynyl-Gruppe, eine substituierte oder unsubstituierte C6-C30-Aryl-Gruppe, eine substituierte oder unsubstituierte C1-C30-Alkoxy-Gruppe, eine substituierte oder unsubstituierte C2-C30-Alkoxyalkyl-Gruppe, eine substituierte oder unsubstituierte C6-C30-Aryloxy-Gruppe, eine substituierte oder unsubstituierte C7-C30-Aryloxyalkyl-Gruppe, eine substituierte oder unsubstituierte C7-C30-Arylalkyl-Gruppe, eine substituierte oder unsubstituierte C2-C30-Heteroaryl-Gruppe, eine substituierte oder unsubstituierte C2-C30-Heteroaryloxy-Gruppe, eine substituierte oder unsubstituierte C3-C30-Heteroarylalkyl-Gruppe, eine substituierte oder unsubstituierte C4-C30-carbocyclische-Gruppe, eine substituierte oder unsubstituierte C5-C30-carbocyclische Alkyl-Gruppe, eine substituierte oder unsubstituierte C4-C30-carbocyclische Oxy-Gruppe, eine substituierte oder unsubstituierte C5-C30-carbocyclische Oxyalkyl-Gruppe, eine substituierte oder unsubstituierte C2-C30-heterocyclische Gruppe, oder eine substituierte oder unsubstituierte C3-C30-heterocyclische Alkyl-Gruppe, eine substituierte oder unsubstituierte C2-C30-heterocyclische Oxy-Gruppe oder eine substituierte oder unsubstituierte C3-C30-heterocyclische Oxyalkyl-Gruppe;

vorzugsweise wobei das Kation ein Pyrrolidinium-Kation ist, dargestellt durch Formel 2a:

Formel 2a

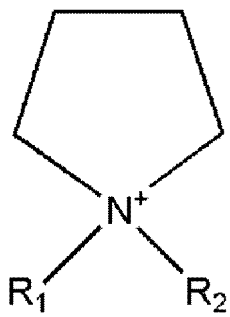

wobei in Formel 2a,

$R_1$ und $R_2$ sind jeweils unabhängig ein Wasserstoff, eine substituierte oder unsubstituierte C1-C30-Alkyl-Gruppe, eine substituierte oder unsubstituierte C4-C30-carbocyclische Gruppe, eine substituierte oder unsubstituierte C5-C30-carbocyclische Alkyl-Gruppe oder eine substituierte oder unsubstituierte C2- C30-Alkenyl-Gruppe, wobei mindestens eines von $R_1$ und $R_2$ 4 oder mehr Kohlenstoffatome umfasst;

wobei eine substituierte Alkyl-Gruppe, Alkenyl-Gruppe, Alkynyl-Gruppe, Aryl-Gruppe, Alkoxy-Gruppe, Alkoxyalkyl-Gruppe, Aryloxy-Gruppe, Aryloxyalkyl-Gruppe, Arylalkyl-Gruppe, Heteroaryl-Gruppe, Heteroaryloxy-Gruppe, Heteroarylalkyl-Gruppe, carbocyclische Gruppe, carbocyclische Alkyl-Gruppe, carbocyclische Oxy-Gruppe, carbocyclische Oxyalkyl-Gruppe, heterocyclische Gruppe, heterocyclische Alkyl-Gruppe, heterocyclische Oxy-Gruppe oder heterocyclische Oxyalkyl-Gruppe angibt, dass die Gruppe substituiert ist mit einem Halogenatom, einer C1-C20-Alkyl-Gruppe substituiert mit einem Halogenatom, einer C1-C20-Alkoxy-Gruppe, einer C2-C20-Alkoxyalkyl-Gruppe, einer Hydroxy-Gruppe, einer Nitro-Gruppe, einer Cyano-Gruppe, einer Amino-Gruppe, einer Amidino-Gruppe, einer Hydrazin-Gruppe, einer Hydrazon-Gruppe, einer carboxylischen Säure oder einem Salz davon, einer Sulfonyl-Gruppe, einer Sulfamoyl-Gruppe, einer Sulfonsäure oder einem Salz davon, einer Phosphorsäure oder einem Salz davon, einer Cl-C20-Alkyl-Gruppe, einer C2-C20-Alkenyl-Gruppe, einer C2-C20-Alkynyl-Gruppe, einer C1-C20-Heteroalkyl-Gruppe, einer C6-C20-Aryl-Gruppe, einer C6-C20-Arylalkyl-Gruppe, einer C6-C20-Heteroaryl-Gruppe, einer C6-C20-Heteroaryloxy-Gruppe, oder einer C6-C20-Heteroaryloxyalkyl-Gruppe.

**3.** Lithiummetall-Batterie nach Anspruch 1 oder 2, wobei mindestens ein Wasserstoffatom von $R_1$ bis $R_6$ mit einem Halogenatom substituiert ist, eine C1-C20-Alkyl-Gruppe mit einem Halogenatom, einer C1-C20-Alkoxy-Gruppe, einer C2-C20-Alkoxyalkyl-Gruppe, einer Hydroxyl-Gruppe, einer Nitro-Gruppe, einer Cyano-Gruppe, an Amino-Gruppe, an Amidino-Gruppe, einer Hydrazin-Gruppe, einer Hydrazon-Gruppe, einer Carbonsäure oder einem Salz davon, einer Sulfonyl-Gruppe, einer Sulfamoyl-Gruppe, einer Sulfonsäure oder einem Salz davon, einer Phosphorsäure oder einem Salz davon, einer C1-C20-Alkyl-Gruppe, einer C2-C20-Alkenyl-Gruppe, einer C2-C20-Alkynyl-Gruppe, einer C1-C20-Heteroalkyl-Gruppe, einer C6-C20-Aryl-Gruppe, einer C6-C20-Arylalkyl-Gruppe, einer C6-C20-Heteroaryl-Gruppe, einer C7-C20-Heteroarylalkyl-Gruppe, einer C6-C20-Heteroaryloxy-Gruppe, einer C6-C20-Heteroaryloxyalkyl-Gruppe, oder einer C6-C20-Heteroarylalkyloxy-Gruppe substituiert ist.

**4.** Lithiummetall-Batterie nach Anspruch 1, wobei das Kation mindestens eines ausgewählt aus N-Butyl-N-methylpyrrolidinium, N-Methyl-N-pentylpyrrolidinium, N-Hexyl-N-methylpyrrolidinium, N-Heptyl-N-methylpyrrolidinium, N-Methyl-N-octylpyrrolidinium, N-Methyl-N-nonylpyrrolidinium, N-Decyl-N-methylpyrrolidinium, N-Methyl-N-undecylpyrrolidinium, N-Dodecyl-N-methylpyrrolidinium, N-Methyl-N-tridecylpyrrolidinium, N-Methyl-N-tetradecylpyrrolidinium, N-Methyl-N-pentadecylpyrrolidinium, N-Hexadecyl-N-methylpyrrolidinium, N-Heptadecyl-N-methylpyrrolidinium, N-Methyl-N-octadecylpyrrolidinium, N-Methyl-N-nonadecylpyrrolidinium, N-Eicosyl-N-methylpyrrolidinium, N-Butyl-N-ethylpyrrolidinium, N-Butyl-N-propylpyrrolidinium, N,N-Dibutylpyrrolidinium, N-Butyl-N-pentylpyrrolidinium, N-Butyl-N-hexylpyrrolidinium, N-Butyl-N-heptylpyrrolidinium, N-Butyl-N-octylpyrrolidinium, N-Butyl-N-nonylpyrrolidinium und N-Butyl-N-decylpyrrolidinium umfasst.

**5.** Lithiummetall-Batterie nach einem der Ansprüche 1-4, wobei die Menge des Kations der ionischen Flüssigkeit von größer als 0 Gewichtsanteile bis 2 Gewichtsanteile beruhend auf 100 Gewichtsanteilen des organischen Lösungsmittels ist.

**6.** Lithiummetall-Batterie nach einem der Ansprüche 1-5, wobei das Anion mindestens eines ausgewählt aus $BF_4^-$, $PF_6^-$, $AsF_6^-$, $SbF_6^-$, $AlCL_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF$, $(CF_3)_6P^-$, $SF_5CF_2SO_3^-$, $SF_5CHFCF_2SO_3$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N^-$, und $(CF_3SO_2)_2N^-$ ist.

**7.** Lithiummetall-Batterie nach einem der Ansprüche 1-6, wobei das organische Lösungsmittel ein Ether-Lösungsmittel umfasst, vorzugsweise wobei das organische Lösungsmittel Folgendes umfasst:
ein Ether-Lösungsmittel, in dem Lithiumionen gelöst sind, und ein Fluor-substituiertes Ether-Lösungsmittel, dargestellt durch Formel 3:

Formel 3 $$R\text{-}\{O(CH_2)_a\}_b\text{-}CH_2\text{-}O\text{-}C_nF_{2n}H$$

wobei in Formel 3,
R hat die Formel $C_mF_{2m}H$ oder $C_mF_{2m+1}$, n ist eine Ganzzahl von 2 oder größer, m ist eine Ganzzahl von 1 oder größer, a ist eine Ganzzahl von 1 oder 2, und b ist 0 oder 1.

**8.** Lithiummetall-Batterie nach Anspruch 7, wobei eine Menge des Fluor-substituierten Ether-Lösungsmittels dargestellt durch Formel 3größer als eine Menge des Ether-Lösungsmittels ist, in dem Lithiumionen gelöst sind, vorzugsweise wobei eine Menge des Ether-Lösungsmittels, in dem Lithiumionen gelöst sind, in einem Bereich von 15 Volumenprozent bis ungefähr 45 Volumenprozent ist, und die Menge des Fluor-substituierten Ether-Lösungsmittels dargestellt durch Formel 3 ist in einem Bereich von 55 Volumenprozent bis 85 Volumenprozent.

**9.** Lithiummetall-Batterie nach Anspruch 7 oder 8, wobei das Fluor-substituierte Ether-Lösungsmittel eine Verbindung dargestellt durch Formel 4 ist:

Formel 4 $R\text{-}CH_2\text{-}O\text{-}C_nF_{2n}H$

wobei in Formel 4 R $C_{m+1}H_mF_{2m}$ oder $C_mF_{2m+1}$ ist, n eine Ganzzahl von 2 bis 5 ist und m eine Ganzzahl von 1 bis 5 ist;
vorzugsweise wobei das Fluor-substituierte Ether-Lösungsmittel dargestellt durch Formel 4 mindestens eines ist ausgewählt aus $HCF_2CF_2CH_2OCF_2CF_2H$, $HCF_2CF_2CH_2OCF_2CF_2CF_2CF_2H$, $HCF_2CF_2OCH_2CF_3$, $HCF_2CF_2OCH_2CH_2OCF_2CF_2H$, $HCF_2CF_2OCH_2CH_2CH_2OCF_2CF_2H$, $HCF_2CF_2CH_2OCF_2CF_2CF_2H$, $HCF_2CF_2OCH_2CH_2OCF_2CF_2CF_2H$ und $HCF_2CF_2OCH_2CH_2CH_2OCF_2CF_2CF_2H$.

**10.** Lithiummetall-Batterie nach einem der Ansprüche 7-9, wobei das Ether-Lösungsmittel, in dem Lithiumionen gelöst sind, ein Glykolether-Lösungsmittel ist, und/oder wobei das Ether-Lösungsmittel, in dem Lithiumionen gelöst sind, mindestens eines ausgewählt aus Ethylenglykoldimethylether, Ethylenglykoldiethylether, Propylenglykoldimethylether, Propylenglykoldiethylether, Butylenglykoldimethylether, Butylenglykoldiethylether, Diethylenglykoldimethylether, Triethylenglykoldimethylether, Tetraethylenglykoldimethylether, Diethylenglykoldiethylether, Triethylenglykoldiethylether, Tetraethylenglykoldiethylether, Dipropylenglykoldimethylether, Tripropylenglykoldimethylether, Tetrapropylenglykoldimethylether, Dipropylenglykoldiethylether, Tripropylenglykoldiethylether, Tetrapropylenglykoldiethylether, Dibutylenglykoldimethylether, Tributylenglykoldimethylether, Tetrabutylenglykoldimethylether, Dibutylenglykoldiethylether, Tributylenglykoldiethylether, Tetrabutylenglykoldiethylether, Poly(ethylenglykol)dilaurat, Poly(ethylenglykol)monoacrylat und Poly(ethylenglykol)diacrylat ist.

**11.** Lithiummetall-Batterie nach einem der Ansprüche 1-10, wobei das organische Lösungsmittel ferner mindestens eines ausgewählt aus Ethylencarbonat, Propylencarbonat, Dimethylcarbonat, Diethylcarbonat, Butylencarbonat, Ethylmethylcarbonat, Fluorethylencarbonat, Methylpropylcarbonat, Ethylpropylcarbonat, Methylisopropylcarbonat, Dipropylcarbonat, Dibutylcarbonat, Gamma-butyrolacton, Dimethylenglykoldimethylether, Trimethylenglykoldimethylether, Tetraethylenglykoldimethylether, Polyethylenglykoldimethylether, Succinonitril, Dimethylsulfon, Ethylmethylsulfon, Diethylsulfon, Adiponitril, 1,1,2,2-Tetrafluorethyl-2,2,3,3-Tetrafluorpropylether,2,3,3,4,4,5,5-octafluoropentyl-1,1,2,2-tetraf luorethylether, Benzonitril, Acetonitril, Tetrahydrofuran, 2-Methyltetrahydrofuran, Dioxolan, 4-Methyldioxolan, N,N-Dimethylformamid, N,N-Dimethylacetamid, Dimethylsulfoxid, Dioxan, Sulfolan, Dichloroethan, Chlorobenzol und Nitrobenzol ist.

**12.** Lithiummetall-Batterie nach einem der Ansprüche 1-11, wobei der Elektrolyt ferner mindestens eine Lithiumsalz umfasst, ausgewählt aus LiSCN, $LiN(CN)_2$, $LiClO_4$, $LiBF_4$, $LiAsF_6$, $LiPF_6$, $LiCF_3SO_3$, $Li(CF_3SO_2)_2N$, $Li(CF_3SO_2)_3C$, $LiSbF_6$, $Li(FSO_2)_2N$, $LiC_4F_9SO_3$, $LiN(SO_2CF_2CF_3)_2$, $LiSbF_6$, $LiPF_3(CF_2CF_3)_3$, $LiPF_3(C_2F_5)_3$, $LiPF_3(CF_3)_3$, LiCl, LiF, LiBr, LiI, $LiB(C_2O_4)_2$ und Lithiumdifluor(oxalat)borat.

**13.** Lithiummetall-Batterie nach Anspruch 12, wobei eine Menge des Lithiumsalzes in einem Bereich von 0,1 Mol pro Liter bis 7 Mol pro Liter ist.

**14.** Lithiummetall-Batterie nach einem der Ansprüche 1-13, ferner umfassend eine Lithium-Abscheidungsschicht, die auf einer Oberfläche der negativen Lithiummetall-Elektrode aufgebracht ist, vorzugsweise wobei eine Abscheidungsdichte der Lithium-Abscheidungsschicht berechnet gemäß Gleichung 1 30 % oder größer ist:

Gleichung 1

$$\rho_d = \frac{d_{th}}{d_{re}} \times 100$$

wobei

$\rho_d$ eine Abscheidungsdichte in Bezug auf eine Soll-Lithium-Dichte der Lithium-Abscheidungsschicht ist, $d_{th}$ eine Soll-Stärke der Lithium-Abscheidungsschicht ist, $d_{re}$ eine Ist-Stärke der Lithium-Abscheidungsschicht ist, und $d_{th}$ gemäß Gleichung 2 berechnet ist:

Gleichung 2

$$d_{th} = \frac{C_d}{C_{th}} \times \frac{1}{\rho_{th} A}$$

wobei

$C_{th}$ eine Soll-Kapazität eines Lithiummetalls ist, die 3,860 Milliamperestunden pro Gramm ist,
$\rho_{th}$ eine Soll-Dichte eines Lithiummetalls ist, die 0,53 Gramm pro Kubikzentimeter ist, $A$ eine Abscheidungsfläche ist, ausgedrückt in Quadratzentimetern, und
$C_d$ eine Abscheidungskapazität ist, ausgedrückt in Milliamperestunden.

**15.** Verfahren zum Herstellen einer Lithiummetall-Batterie, wobei das Verfahren Folgendes beinhaltet: Bereitstellen einer positiven Elektrode mit einem positiven aktiven Material, das darauf abgeschieden ist; Bereitstellen einer negativen Lithiummetall-Elektrode;
Anbringen eines Trennelements zwischen der positiven Elektrode und der negativen Lithiummetall-E lektrode;
Anbringen der positiven Elektrode, des Trennelements und der negativen Elektrode in einem Batteriegehäuse; und Hinzufügen eines flüssigen Elektrolyten zu dem Zellengehäuse, sodass er Kontakt mit der positiven Elektrode, der negativen Lithiummetall-Elektrode und einem Trennelement hat, um die Lithiummetall-Batterie herzustellen,
wobei der flüssige Elektrolyt Folgendes beinhaltet
eine ionische Flüssigkeit, die ein Kation umfasst, das durch Formel 1 dargestellt ist, und ein Anion und ein organisches Lösungsmittel:

Formel 1

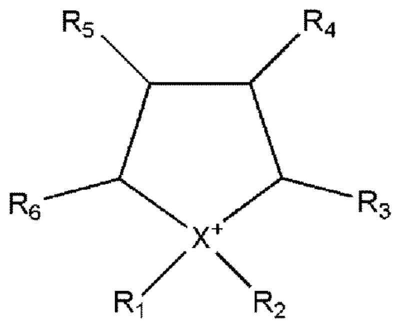

wobei in Formel 1,

X ist N, P oder As;
$R_1$ und $R_2$ sind jeweils unabhängig ein Wasserstoff, eine substituierte oder unsubstituierte C1-C30-Alkyl-Gruppe, eine substituierte oder unsubstituierte C4-C30-carbocyclische-Gruppe, eine substituierte oder unsubstituierte C5-C30-carbocyclische Alkyl-Gruppe, oder eine substituierte oder unsubstituierte C2-C30-Alkenyl-Gruppe, wobei mindestens eines von $R_1$ und $R_2$ 4 oder mehr Kohlenstoffatome beinhaltet; und
$R_3$ bis $R_6$ sind jeweils unabhängig ein Wasserstoffatom, eine Halogenatom, eine Cyano-Gruppe, eine substituierte oder unsubstituierte C1-C30-Alkyl-Gruppe, eine substituierte oder unsubstituierte C2-C30-Alkenyl-Gruppe, eine substituierte oder unsubstituierte C2-C30-Alkynyl-Gruppe, eine substituierte oder unsubstituierte C6-C30-Aryl-Gruppe, eine substituierte oder unsubstituierte C1-C30-Alkoxy-Gruppe, eine substituierte oder unsubstituierte C2-C30-Alkoxyalkyl-Gruppe, eine substituierte oder unsubstituierte C6-C30-Aryloxy-Gruppe, eine substituierte oder unsubstituierte C7-C30-Aryloxyalkyl-Gruppe, eine substituierte oder unsubstituierte C7-C30-Arylalkyl-Gruppe, eine substituierte oder unsubstituierte C2-C30-Heteroaryl-Gruppe, eine substituierte oder unsubstituierte C2-C30-Heteroaryloxy-Gruppe, eine substituierte oder unsubstituierte C3-C30-Heteroarylalkyl-Gruppe, eine substituierte oder unsubstituierte C4-C30-carbocyclische-Gruppe, eine substituierte oder unsubstituierte C5-C30-carbocyclische Alkyl-Gruppe, eine substituierte oder unsubstituierte C4-C30-carbocyclische Oxy-Gruppe, eine substituierte oder unsubstituierte C5-C30-carbocyclische Oxyalkyl-Gruppe, eine substituierte oder unsubstituierte C2-C30-heterocyclische Gruppe, oder eine substituierte oder unsubstituierte C3-C30-heterocyclische Alkyl-Gruppe, eine substituierte oder unsubstituierte C2-C30-heterocyclische Oxy-Gruppe oder eine substituierte oder unsubstituierte C3-C30-heterocyclische Oxyalkyl-Gruppe;
wobei eine substituierte Alkyl-Gruppe, Alkenyl-Gruppe, Alkynyl-Gruppe, Aryl-Gruppe, Alkoxy-Gruppe, Alkoxyalkyl-Gruppe, Aryloxy-Gruppe, Aryloxyalkyl-Gruppe, Arylalkyl-Gruppe, Heteroaryl-Gruppe, Heteroaryloxy-Gruppe, Heteroarylalkyl-Gruppe, carbocyclische Gruppe, carbocyclische Alkyl-Gruppe, carbocyclische Oxy-Gruppe, carbocyclische Oxyalkyl-Gruppe, heterocyclische Gruppe, heterocyclische Alkyl-Gruppe, heterocyclische Oxy-Gruppe oder heterocyclische Oxyalkyl-Gruppe angibt, dass die Gruppe substituiert ist mit einem Halogenatom, einer C1-C20-Alkyl-Gruppe substituiert mit einem Halogenatom, einer C1-C20-Alkoxy-Gruppe, einer C2-C20-Alkoxyalkyl-Gruppe, einer Hydroxy-Gruppe, einer Nitro-Gruppe, einer Cyano-Gruppe, einer Amino-Gruppe, einer Amidino-Gruppe, einer Hydrazin-Gruppe, einer Hydrazon-Gruppe, einer carboxylischen Säure oder einem Salz davon, einer Sulfonyl-Gruppe, einer Sulfamoyl-Gruppe, einer Sulfonsäure oder einem Salz davon, einer Phosphorsäure oder einem Salz davon, einer Cl-C20-Alkyl-Gruppe, einer C2-C20-Alkenyl-Gruppe, einer C2-C20-Alkynyl-Gruppe, einer C1-C20-Heteroalkyl-Gruppe, einer C6-C20-Aryl-Gruppe, einer C6-C20-Arylalkyl-Gruppe, einer C6-C20-Heteroaryl-Gruppe, einer C6-C20-Heteroaryloxy-Gruppe, oder einer C6-C20-Heteroaryloxyalkyl-Gruppe; und wobei die Menge des Kations der ionischen Flüssigkeit von größer als 0 Gewichtsanteile bis 3 Gewichtsanteile beruhend auf 100 Gewichtsanteilen des organischen Lösungsmittels ist.

**Revendications**

**1.** Batterie au lithium métallique comprenant :

une électrode négative de lithium métallique ;
une électrode positive ; et
un électrolyte liquide se trouvant entre l'électrode négative de lithium métallique et l'électrode positive, ledit électrolyte liquide comprenant :

un liquide ionique comprenant un cation représenté par la formule 1 et un anion, et
un solvant organique :

Formule 1

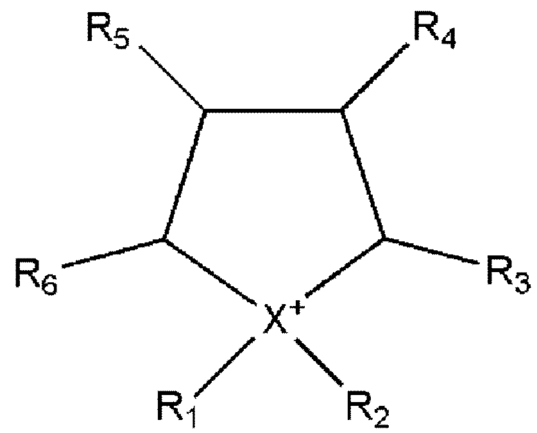

dans laquelle dans la formule 1,

X représente un atome N, P ou As ;
$R_1$ et $R_2$ représentent chacun indépendamment un atome d'hydrogène, un groupe alkyle en C1 à C30 substitué ou non substitué, un groupe carbocyclique en C4 à C30 substitué ou non substitué, un groupe carbocyclique alkyle en C5 à C30 substitué ou non substitué, ou un groupe alcényle en C2 à C30 substitué ou non substitué, au moins l'un des groupes $R_1$ et $R_2$ comprenant 4 atomes de carbone ou plus ; et
$R_3$ à $R_6$ représentent chacun indépendamment un atome d'hydrogène, un atome d'halogène, un groupe cyano, un groupe alkyle en C1 à C30 substitué ou non substitué, un groupe alcényle en C2 à C30 substitué ou non substitué, un groupe alcynyle en C2 à C30 substitué ou non substitué, un groupe

aryle en C6 à C30 substitué ou non substitué, un groupe alcoxy en C1 à C30 substitué ou non substitué, un groupe alcoxyalkyle en C2 à C30 substitué ou non substitué, un groupe aryloxy en C6 à C30 substitué ou non substitué, un groupe aryloxyalkyle en C7 à C30 substitué ou non substitué, un groupe arylalkyle en C7 à C30 substitué ou non substitué, un groupe hétéroaryle en C2 à C30 substitué ou non substitué, un groupe hétéroaryloxy en C2 à C30 substitué ou non substitué, un groupe hétéroarylalkyle en C3 à C30 substitué ou non substitué, un groupe carbocyclique en C4 à C30 substitué ou non substitué, un groupe carbocyclique alkyle en C5 à C30 substitué ou non substitué, un groupe carbocyclique oxy en C4 à C30 substitué ou non substitué, un groupe carbocyclique oxyalkyle en C5 à C30 substitué ou non substitué, un groupe hétérocyclique en C2 à C30 substitué ou non substitué, ou un groupe hétérocyclique alkyle en C3 à C30 substitué ou non substitué, un groupe hétérocyclique oxy en C2 à C30 substitué ou non substitué, ou un groupe hétérocyclique oxyalkyle en C3 à C30 substitué ou non substitué ;

dans laquelle, un groupe alkyle, groupe alcényle, groupe alcynyle, groupe aryle, groupe alcoxy, groupe alcoxyalkyle, groupe aryloxy, groupe aryloxyalkyle, groupe arylalkyle, groupe hétéroaryle, groupe hétéroaryloxy, groupe hétéroarylalkyle, groupe carbocyclique, groupe carbocyclique alkyle, groupe carbocyclique oxy, groupe carbocyclique oxyalkyle, groupe hétérocyclique, groupe hétérocyclique alkyle, groupe hétérocyclique oxy ou groupe hétérocyclique oxyalkyle substitué indique que le groupe est substitué par un atome d'halogène, un groupe alkyle en C1 à C20 substitué par un atome d'halogène, un groupe alcoxy en C1 à C20, un groupe alcoxyalkyle en C2 à C20, un groupe hydroxy, un groupe nitro, un groupe cyano, un groupe amino, un groupe amidino, un groupe hydrazine, un groupe hydrazone, un groupe acide carboxylique ou un sel de celui-ci, un groupe sulfonyle, un groupe sulfamoyle, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe hétéroalkyle en C1 à C20, un groupe aryle en C6 à C20, un groupe arylalkyle en C6 à C20, un groupe hétéroaryle en C6 à C20, un groupe hétéroaryloxy en C6 à C20, ou un groupe hétéroaryloxyalkyle en C6 à C20 ; et
dans laquelle la quantité du cation dans le liquide ionique va de plus de 0 parties en poids à 3 parties en poids, par rapport à 100 parties en poids du solvant organique.

**2.** Batterie au lithium métallique selon la revendication 1, ledit cation étant un cation pyrrolidinium représenté par la formule 2 :

Formule 2

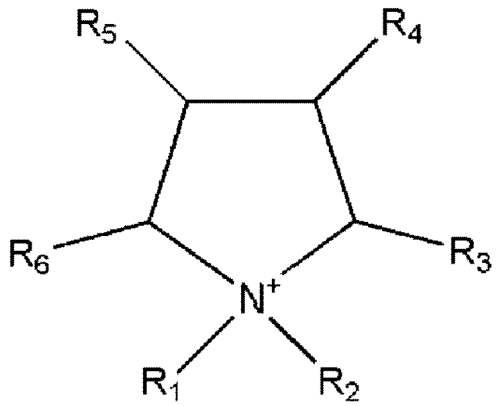

dans laquelle dans la formule 2,

$R_1$ et $R_2$ représentent chacun indépendamment un atome d'hydrogène, un groupe alkyle en C1 à C30 substitué ou non substitué, un groupe carbocyclique en C4 à C30 substitué ou non substitué, un groupe carbocyclique alkyle en C5 à C30 substitué ou non substitué, un groupe alcényle en C2 à C30 substitué ou non substitué, au moins l'un des groupes $R_1$ et $R_2$ comprenant 4 atomes de carbone ou plus ; et
$R_3$ à $R_6$ représentent chacun indépendamment un atome d'hydrogène, un atome d'halogène, un groupe cyano, un groupe alkyle en C1 à C30 substitué ou non substitué, un groupe alcényle en C2 à C30 substitué ou non substitué, un groupe alcynyle en C2 à C30 substitué ou non substitué, un groupe aryle en C6 à C30 substitué ou non substitué, un groupe alcoxy en C1 à C30 substitué ou non substitué, un groupe alcoxyalkyle en C2 à

C30 substitué ou non substitué, un groupe aryloxy en C6 à C30 substitué ou non substitué, un groupe aryloxyalkyle en C7 à C30 substitué ou non substitué, un groupe arylalkyle en C7 à C30 substitué ou non substitué, un groupe hétéroaryle en C2 à C30 substitué ou non substitué, un groupe hétéroaryloxy en C2 à C30 substitué ou non substitué, un groupe hétéroarylalkyle en C3 à C30 substitué ou non substitué, un groupe carbocyclique en C4 à C30 substitué ou non substitué, un groupe carbocyclique alkyle en C5 à C30 substitué ou non substitué, un groupe carbocyclique oxy en C4 à C30 substitué ou non substitué, un groupe carbocyclique oxyalkyle en C5 à C30 substitué ou non substitué, un groupe hétérocyclique en C2 à C30 substitué ou non substitué, ou un groupe hétérocyclique alkyle en C3 à C30 substitué ou non substitué, un groupe hétérocyclique oxy en C2 à C30 substitué ou non substitué, ou un groupe hétérocyclique oxyalkyle en C3 à C30 substitué ou non substitué ; de préférence ledit cation étant un cation pyrrolidinium représenté par la formule 2a :

Formule 2a

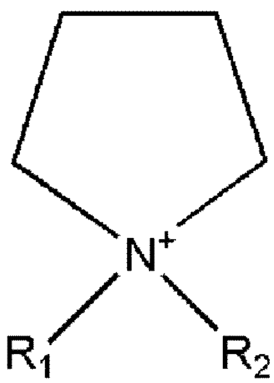

dans laquelle dans la formule 2a,

$R_1$ et $R_2$ représentent chacun indépendamment un atome d'hydrogène, un groupe alkyle en C1 à C30 substitué ou non substitué, un groupe carbocyclique en C4 à C30 substitué ou non substitué, un groupe carbocyclique alkyle en C5 à C30 substitué ou non substitué, ou un groupe alcényle en C2 à C30 substitué ou non substitué, au moins l'un des groupes $R_1$ et $R_2$ comprenant 4 atomes de carbone ou plus ;
dans laquelle, un groupe alkyle, groupe alcényle, groupe alcynyle, groupe aryle, groupe alcoxy, groupe alcoxyalkyle, groupe aryloxy, groupe aryloxyalkyle, groupe arylalkyle, groupe hétéroaryle, groupe hétéroaryloxy, groupe hétéroarylalkyle, groupe carbocyclique, groupe carbocyclique alkyle, groupe carbocyclique oxy, groupe carbocyclique oxyalkyle, groupe hétérocyclique, groupe hétérocyclique alkyle, groupe hétérocyclique oxy ou groupe hétérocyclique oxyalkyle substitué indique que le groupe est substitué par un atome d'halogène, un groupe alkyle en C1 à C20 substitué par un atome d'halogène, un groupe alcoxy en C1 à C20, un groupe alcoxyalkyle en C2 à C20, un groupe hydroxy, un groupe nitro, un groupe cyano, un groupe amino, un groupe amidino, un groupe hydrazine, un groupe hydrazone, un groupe acide carboxylique ou un sel de celui-ci, un groupe sulfonyle, un groupe sulfamoyle, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe hétéroalkyle en C1 à C20, un groupe aryle en C6 à C20, un groupe arylalkyle en C6 à C20, un groupe hétéroaryle en C6 à C20, un groupe hétéroaryloxy en C6 à C20, un groupe hétéroaryloxyalkyle en C6 à C20.

**3.** Batterie au lithium métallique selon la revendication 1 ou 2, ledit au moins un atome d'hydrogène de $R_1$ à $R_6$ étant substitué par un atome d'halogène, un groupe alkyle en C1 à C20 substitué par un atome d'halogène, un groupe alcoxy en C1 à C20, un groupe alcoxyalkyle en C2 à C20, un groupe hydroxy, un groupe nitro, un groupe cyano, un groupe amino, un groupe amidino, un groupe hydrazine, un groupe hydrazone, un groupe acide carboxylique ou un sel de celui-ci, un groupe sulfonyle, un groupe sulfamoyle, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe hétéroalkyle en C1 à C20, un groupe aryle en C6 à C20, un groupe arylalkyle en C6 à C20, un groupe hétéroaryle en C6 à C20, un groupe hétéroarylalkyle en C7 à C20, un groupe hétéroaryloxy en C6 à C20, un groupe hétéroaryloxyalkyle en C6 à C20, ou un groupe hétéroarylalkyloxy en C6 à C20.

**4.** Batterie au lithium métallique selon la revendication 1, ledit cation comprenant au moins l'un choisi parmi N-butyl-N-méthylpyrrolidinium, N-méthyl-N-pentylpyrrolidinium, N-hexyl-N-méthylpyrrolidinium, N-heptyl-N-méthylpyrrolidinium, N-méthyl-N-octylpyrrolidinium, N-méthyl-N-nonylpyrrolidinium, N-décyl-N-méthylpyrrolidinium, N-méthyl-N-undécylpyrrolidinium, N-dodécyl-N-méthylpyrrolidinium, N-méthyl-N-tridécylpyrrolidinium, N-méthyl-N-tétradécylpyrrolidinium, N-méthyl-N-pentadécylpyrrolidinium, N-hexadécyl-N-méthylpyrrolidinium, N-heptadécyl-N-méthylpyrrolidinium, N-méthyl-N-octadécylpyrrolidinium, N-méthyl-N-nonadécylpyrrolidinium, N-eicosyl-N-méthylpyrrolidinium, N-butyl-N-éthylpyrrolidinium, N-butyl-N-propylpyrrolidinium, N,N-dibutylpyrrolidinium, N-butyl-N-pentylpyrrolidinium, N-butyl-N-hexylpyrrolidinium, N-butyl-N-heptylpyrrolidinium, N-butyl-N-octylpyrrolidinium, N-butyl-N-nonylpyrrolidinium, et N-butyl-N-décylpyrrolidinium.

5. Batterie au lithium métallique selon l'une quelconque des revendications 1 à 4, ladite quantité du cation dans le liquide ionique allant de plus de 0 parties en poids à 2 parties en poids, par rapport à 100 parties en poids du solvant organique.

6. Batterie au lithium métallique selon l'une quelconque des revendications 1 à 5, ledit anion étant au moins l'un choisi parmi $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_3C^-$, $NO_3^-$, $CH_3COO^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $(CF_3)_2PF_4^-$, $(CF_3)_3PF_3^-$, $(CF_3)_4PF_2^-$, $(CF_3)_5PF$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, $(FSO_2)_2N^-$, et $(CF_3SO_2)_2N^-$.

7. Batterie au lithium métallique selon l'une quelconque des revendications 1 à 6, ledit solvant organique comprenant un solvant d'éther, de préférence ledit solvant organique comprenant :

un solvant d'éther dans lequel des ions lithium sont solvatés, et
un solvant d'éther à substitution fluor représenté par la formule 3 :

Formule 3 $R\text{-}\{O(CH_2)_a\}_b\text{-}CH_2\text{-}O\text{-}C_nF_{2n}H$

dans laquelle dans la formule 3,

R est représenté par la formule $C_mF_{2m}H$ or $C_mF_{2m+1}$,
n représente un entier supérieur ou égal à 2,
m représente un entier supérieur ou égal à 1,
a représente un entier valant 1 ou 2, et
b vaut 0 ou 1.

8. Batterie au lithium métallique selon la revendication 7, la quantité du solvant d'éther à substitution fluor représenté par la formule 3 étant supérieure à la quantité du solvant d'éther dans lequel des ions lithium sont solvatés, de préférence la quantité de solvant d'éther dans lequel des ions lithium sont solvatés se trouvant dans la plage de 15 pour cent en volume à environ 45 pour cent en volume, et la quantité du solvant d'éther à substitution fluor représenté par la formule 3 se trouvant dans la plage de 55 pour cent en volume à 85 pour cent en volume.

9. Batterie au lithium métallique selon la revendication 7 ou 8, ledit solvant d'éther à substitution fluor étant un composé représenté par la formule 4 :

Formule 4 $R\text{-}CH_2\text{-}O\text{-}C_nF_{2n}H$

dans laquelle dans la formule 4,

R représente $C_{m+1}H_mF_{2m}$ ou $C_mF_{2m+1}$,
n représente un entier valant de 2 à 5, et
m représente un entier valant de 1 à 5 ;
de préférence ledit solvant d'éther à substitution fluor représenté par la formule 4 étant au moins l'un choisi parmi $HCF_2CF_2CH_2OCF_2CF_2H$, $HCF_2CF_2CH_2OCF_2CF_2CF_2CF_2H$, $HCF_2CF_2OCH_2CF_3$, $HCF_2CF_2OCH_2CH_2OCF_2CF_2H$, $HCF_2CF_2OCH_2CH_2CH_2OCF_2CF_2H$, $HCF_2CF_2CH_2OCF_2CF_2CF_2H$, $HCF_2CF_2OCH_2CH_2OCF_2CF_2CF_2H$ et $HCF_2CF_2OCH_2CH_2CH_2OCF_2CF_2CF_2H$.

10. Batterie au lithium métallique selon l'une quelconque des revendications 7 à 9, ledit solvant d'éther dans lequel des ions lithium sont solvatés étant un solvant glyme et/ou ledit solvant d'éther dans lequel des ions lithium sont solvatés

étant au moins l'un choisi parmi l'éther diméthylique d'éthylène glycol, l'éther diéthylique d'éthylène glycol, l'éther diméthylique de propylène glycol, l'éther diéthylique de propylène glycol, l'éther diméthylique de butylène glycol, l'éther diéthylique de butylène glycol, l'éther diméthylique de diéthylène glycol, l'éther diméthylique de triéthylène glycol, l'éther diméthylique de tétraéthylène glycol, l'éther diéthylique de diéthylène glycol, l'éther diéthylique de triéthylène glycol, l'éther diéthylique de tétraéthylène glycol, l'éther diméthylique de dipropylène glycol, l'éther diméthylique de tripropylène glycol, l'éther diéthylique de tétrapropylène glycol, l'éther diméthylique de dibutylène glycol, l'éther diméthylique de tributylène glycol, l'éther diméthylique de tétrabutylène glycol, l'éther diéthylique de dibutylène glycol, l'éther diéthylique de tributylène glycol, l'éther diéthylique de tétrabutylène glycol, le dilaurate de poly(éthylèneglycol), le monoacrylate de poly(éthylèneglycol), et le diacrylate de poly(éthylèneglycol).

**11.** Batterie au lithium métallique selon l'une quelconque des revendications 1 à 10, ledit solvant organique comprenant en outre au moins l'un choisi parmi le carbonate d'éthylène, le carbonate de propylène, le carbonate de diméthyle, le carbonate de diéthyle, le carbonate de butylène, le carbonate d'éthylméthyle, le carbonate de fluoroéthylène, le carbonate de méthylpropyle, le carbonate d'éthylpropyle, le carbonate de méthylisopropyle, le carbonate de dipropyle, le carbonate de dibutyle, la gamma-butyrolactone, l'éther diméthylique de diméthylène glycol, l'éther diméthylique de triméthylène glycol, l'éther diméthylique de tétraéthylène glycol, l'éther diméthylique de polyéthylène glycol, le succinonitrile, la diméthylsulfone, l'éthylméthylsulfone, la diéthylsulfone, l'adiponitrile, l'éther 1,1,2,2-tétrafluoroéthyl-2,2,3,3-tétrafluoropropylique, l'éther 2,3,3,4,4,5,5-octafluoropentyl-1,1,2,2-tétrafluoroéthylique, la benzonitrile, l'acétonitrile, le tétrahydrofurane, le 2-méthyltétrahydrofurane, le dioxolane, le 4-méthyldioxolane, le N,N-diméthylformamide, le N,N-diméthylacétamide, le sulfoxyde de diméthyle, le dioxane, le sulfolane, le dichloroéthane, le chlorobenzène et le nitrobenzène.

**12.** Batterie au lithium métallique selon l'une quelconque des revendications 1 à 11, ledit électrolyte comprenant en outre au moins un sel de lithium choisi parmi LiSCN, $LiN(CN)_2$, $LiCiO_4$, $LiBF_4$, $LiAsF_6$, $LiPF_6$, $LiCF_3SO_3$, $Li(CF_3SO_2)_2N$, $Li(CF_3SO_2)_3C$, $LiSbF_6$, $Li(FSO_2)_2N$, $LiC_4F_9SO_3$, $LiN(SO_2CF_2CF_3)_2$, $LiSbF_6$, $LiPF_3(CF_2CF_3)_3$, $LiPF_3(C_2F_5)_3$, $LiPF_3(CF_3)_3$, LiCl, LiF, LiBr, LiI, $LiB(C_2O_4)_2$ et le difluoro(oxalato)borate de lithium.

**13.** Batterie au lithium métallique selon la revendication 12, la quantité de sel de lithium se trouvant dans la plage de 0,1 mole par litre à 7 moles par litre.

**14.** Batterie au lithium métallique selon l'une quelconque des revendications 1 à 13, comprenant en outre une couche de dépôt de lithium disposé sur une surface de l'électrode négative de lithium métallique, de préference la densité de dépôt de la couche de dépôt de lithium calculée selon l'équation 1 étant supérieure ou égale à 30 % :

Équation 1

$$\rho_d = \frac{d_{th}}{d_{re}} \times 100$$

dans laquelle

$p_d$ représente la densité de dépôt par rapport à la densité théorique de lithium de la couche de dépôt de lithium,
$d_{th}$ représente l'épaisseur théorique de la couche de dépôt de lithium,
$d_{re}$ représente l'épaisseur réelle de la couche de dépôt de lithium, et
$d_{th}$ est calculée selon l'équation 2 :

$$d_{th} = \frac{C_d}{C_{th}} \times \frac{1}{\rho_{th} A}$$

dans laquelle

$C_{th}$ représente la capacité théorique d'un lithium métallique, qui vaut 3860 milliampères heures par gramme,
$p_{th}$ représente la densité théorique d'un lithium métallique, qui vaut 0,53 gramme par centimètre cube,
A représente la surface de dépôt en centimètres carrés, et

$C_d$ représente une capacité de dépôt exprimée en milliampère heure.

**15.** Procédé de fabrication d'une batterie au lithium métallique, le procédé comprenant :

la production d'une électrode positive sur laquelle est disposé un matériau actif positif ;
la production d'une électrode négative de lithium métallique ;
la disposition d'un séparateur entre l'électrode positive et l'électrode négative de lithium métallique ;
la disposition de l'électrode positive, du séparateur et de l'électrode négative dans un boîtier de batterie ; et
l'ajout d'un électrolyte liquide dans le boîtier de cellule de sorte qu'il soit en contact avec l'électrode positive, l'électrode négative de lithium métallique et un séparateur pour fabriquer la batterie au lithium métallique,
ledit électrolyte liquide comportant
un liquide ionique comportant un cation représenté par la formule 1 et un anion, et un solvant organique :

Formule 1

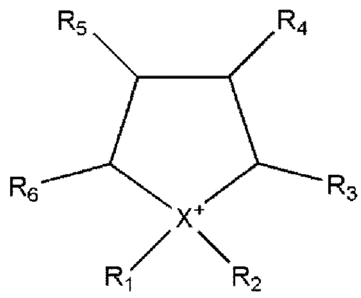

dans laquelle dans la formule 1,

X représente un atome N, P ou As ;
$R_1$ et $R_2$ représentent chacun indépendamment un atome d'hydrogène, un groupe alkyle en C1 à C30 substitué ou non substitué, un groupe carbocyclique en C4 à C30 substitué ou non substitué, un groupe carbocyclique alkyle en C5 à C30 substitué ou non substitué, ou un groupe alcényle en C2 à C30 substitué ou non substitué, au moins l'un des groupes $R_1$ et $R_2$ comprenant 4 atomes de carbone ou plus ; et
$R_3$ à $R_6$ représentent chacun indépendamment un atome d'hydrogène, un atome d'halogène, un groupe cyano, un groupe alkyle en C1 à C30 substitué ou non substitué, un groupe alcényle en C2 à C30 substitué ou non substitué, un groupe alcynyle en C2 à C30 substitué ou non substitué, un groupe aryle en C6 à C30 substitué ou non substitué, un groupe alcoxy en C1 à C30 substitué ou non substitué, un groupe alcoxyalkyle en C2 à C30 substitué ou non substitué, un groupe aryloxy en C6 à C30 substitué ou non substitué, un groupe aryloxyalkyle en C7 à C30 substitué ou non substitué, un groupe arylalkyle en C7 à C30 substitué ou non substitué, un groupe hétéroaryle en C2 à C30 substitué ou non substitué, un groupe hétéroaryloxy en C2 à C30 substitué ou non substitué, un groupe hétéroarylalkyle en C3 à C30 substitué ou non substitué, un groupe carbocyclique en C4 à C30 substitué ou non substitué, un groupe carbocyclique alkyle en C5 à C30 substitué ou non substitué, un groupe carbocyclique oxy en C4 à C30 substitué ou non substitué, un groupe carbocyclique oxyalkyle en C5 à C30 substitué ou non substitué, un groupe hétérocyclique en C2 à C30 substitué ou non substitué, ou un groupe hétérocyclique alkyle en C3 à C30 substitué ou non substitué, un groupe hétérocyclique oxy en C2 à C30 substitué ou non substitué, ou un groupe hétérocyclique oxyalkyle en C3 à C30 substitué ou non substitué ;

dans laquelle, un groupe alkyle, groupe alcényle, groupe alcynyle, groupe aryle, groupe alcoxy, groupe alcoxyalkyle, groupe aryloxy, groupe aryloxyalkyle, groupe arylalkyle, groupe hétéroaryle, groupe hétéroaryloxy, groupe hétéroarylalkyle, groupe carbocyclique, groupe carbocyclique alkyle, groupe carbocyclique oxy, groupe carbocyclique oxyalkyle, groupe hétérocyclique, groupe hétérocyclique alkyle, groupe hétérocyclique oxy ou groupe hétérocyclique oxyalkyle substitué indique que le groupe est substitué par un atome d'halogène, un groupe alkyle en C1 à C20 substitué par un atome d'halogène, un groupe alcoxy en C1 à C20, un groupe alcoxyalkyle en C2 à C20, un groupe hydroxy, un groupe nitro, un groupe cyano, un groupe amino, un groupe amidino, un groupe hydrazine, un groupe hydrazone, un groupe acide carboxylique ou un sel de celui-ci, un groupe sulfonyle, un groupe sulfamoyle, un groupe acide sulfonique ou un sel de celui-ci, un groupe acide phosphorique ou un sel de celui-ci, un groupe alkyle en C1 à C20, un groupe alcényle en C2 à C20, un groupe

alcynyle en C2 à C20, un groupe hétéroalkyle en C1 à C20, un groupe aryle en C6 à C20, un groupe arylalkyle en C6 à C20, un groupe hétéroaryle en C6 à C20, un groupe hétéroaryloxy en C6 à C20, ou un groupe hétéroaryloxyalkyle en C6 à C20 ; et
dans laquelle la quantité du cation dans le liquide ionique va de plus de 0 partie en poids à 3 parties en poids, par rapport à 100 parties en poids du solvant organique.

FIG. 1

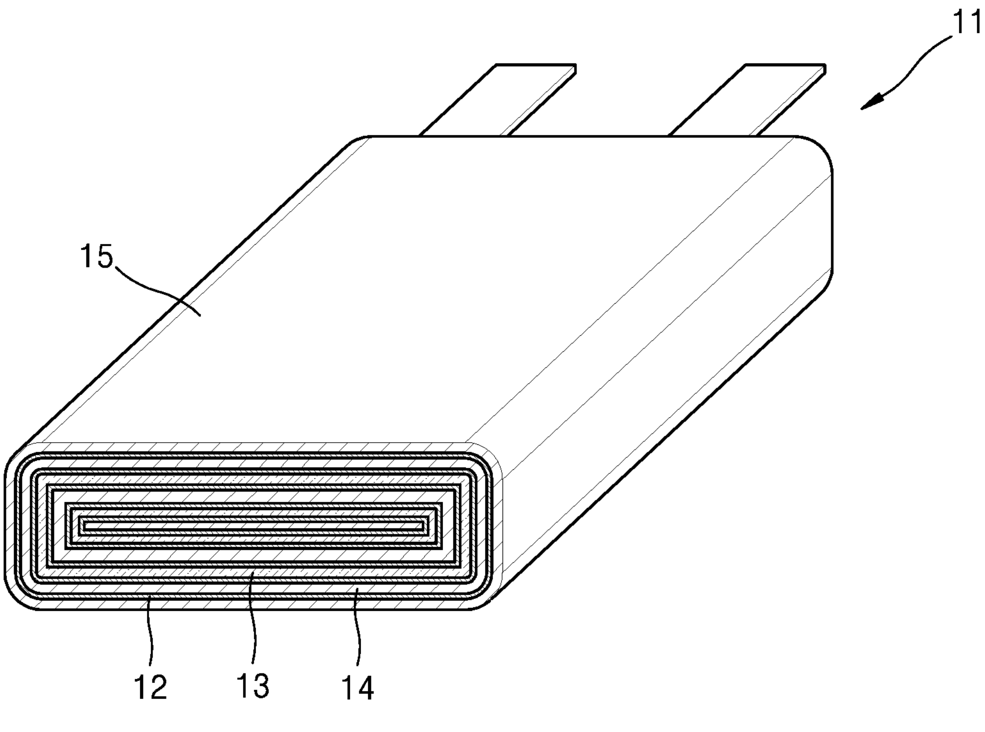

FIG. 2

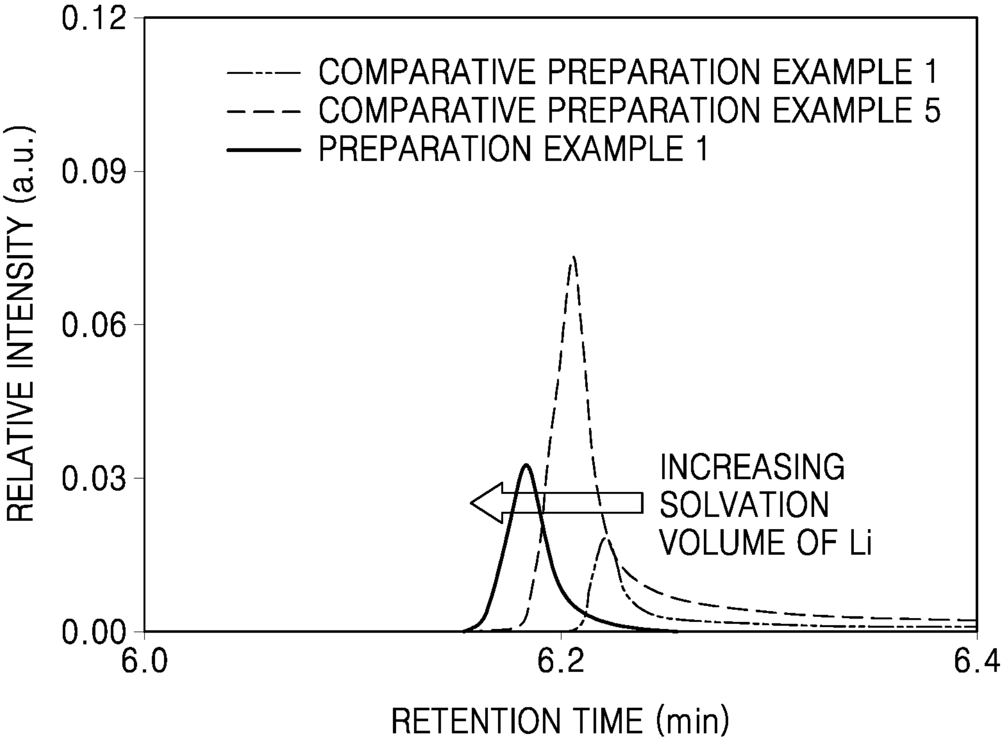
COMPARATIVE PREPARATION EXAMPLE 1
COMPARATIVE PREPARATION EXAMPLE 5
PREPARATION EXAMPLE 1
INCREASING SOLVATION VOLUME OF Li
RELATIVE INTENSITY (a.u.)
0.12
0.09
0.06
0.03
0.00
6.0
6.2
6.4
RETENTION TIME (min)

FIG. 3

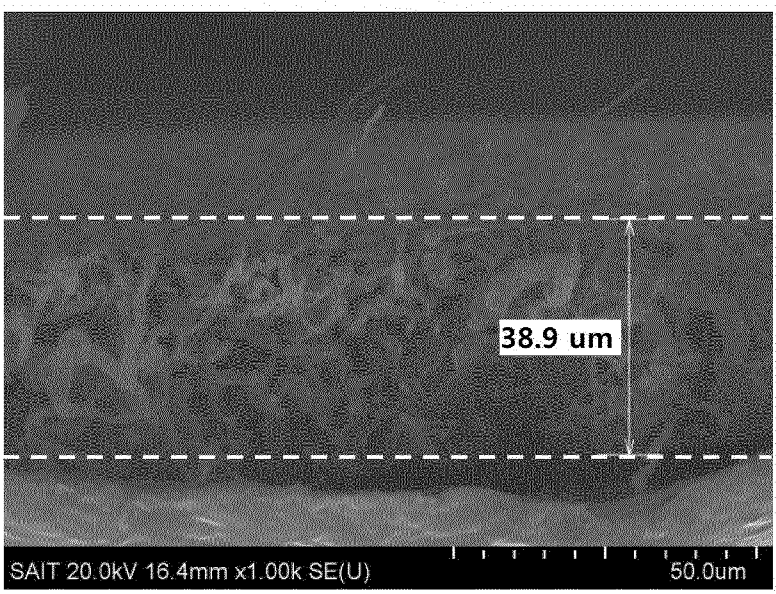
38.9 um
SAIT 20.0kV 16.4mm x1.00k SE(U)
50.0um

FIG. 4

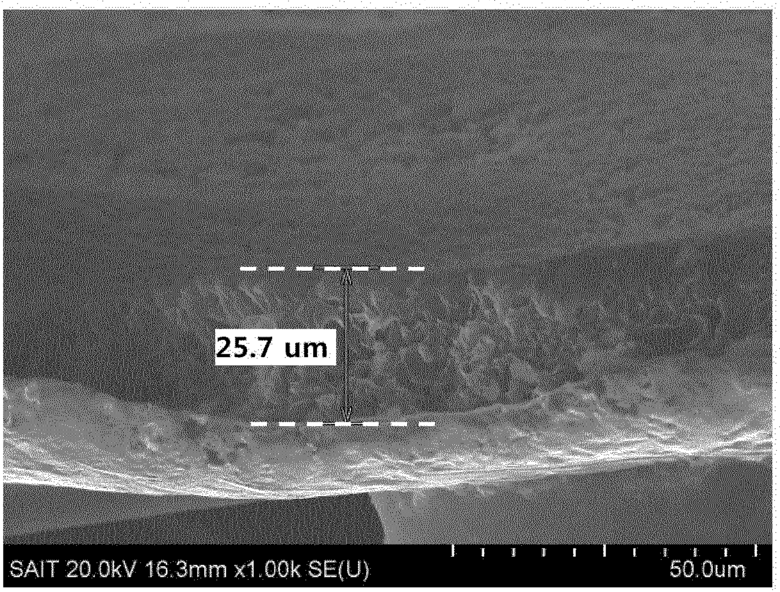
25.7 um
SAIT 20.0kV 16.3mm x1.00k SE(U)
50.0um

FIG. 5A

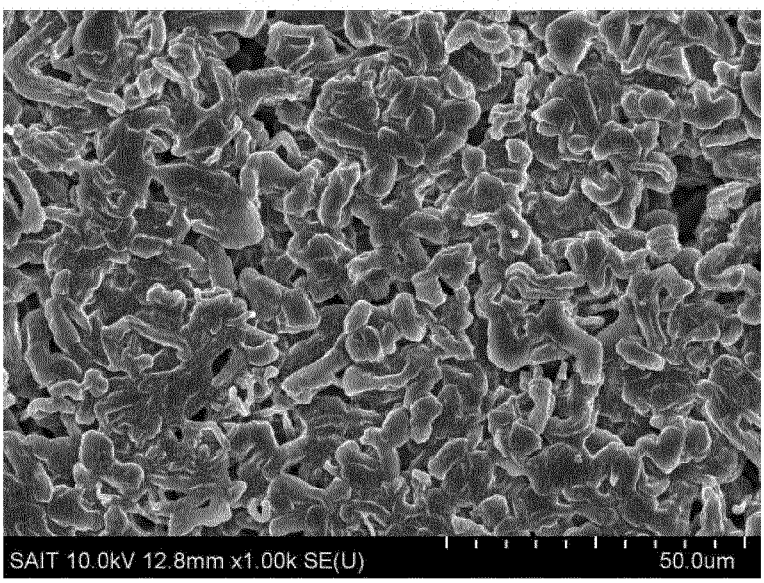
SAIT 10.0kV 12.8mm x1.00k SE(U)
50.0um

FIG. 5B

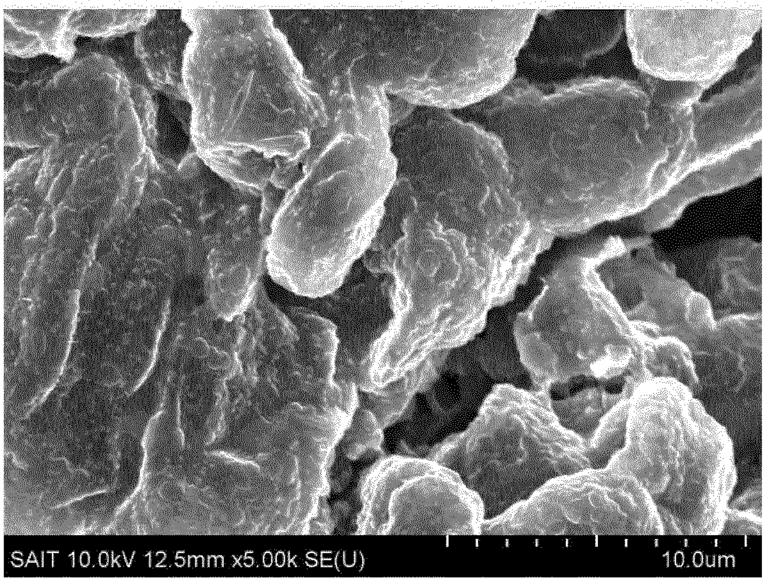
SAIT 10.0kV 12.5mm x5.00k SE(U)
10.0um

FIG. 6A

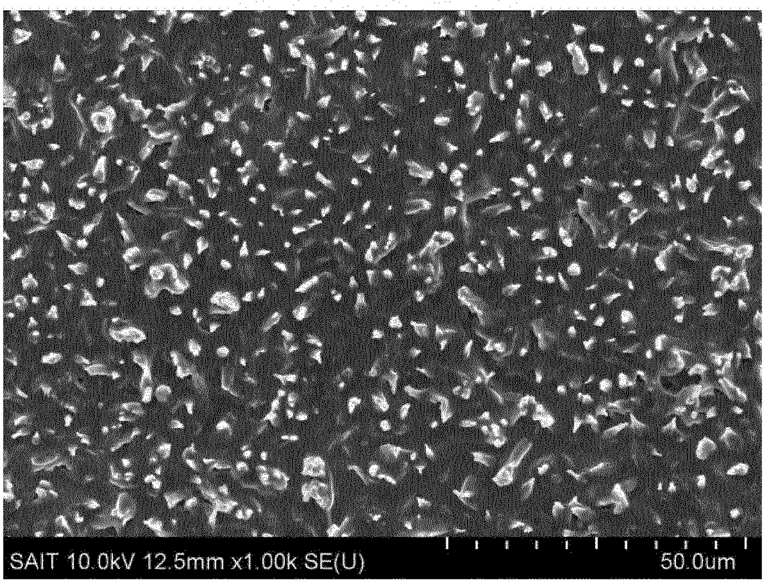
SAIT 10.0kV 12.5mm x1.00k SE(U)
50.0um

FIG. 6B

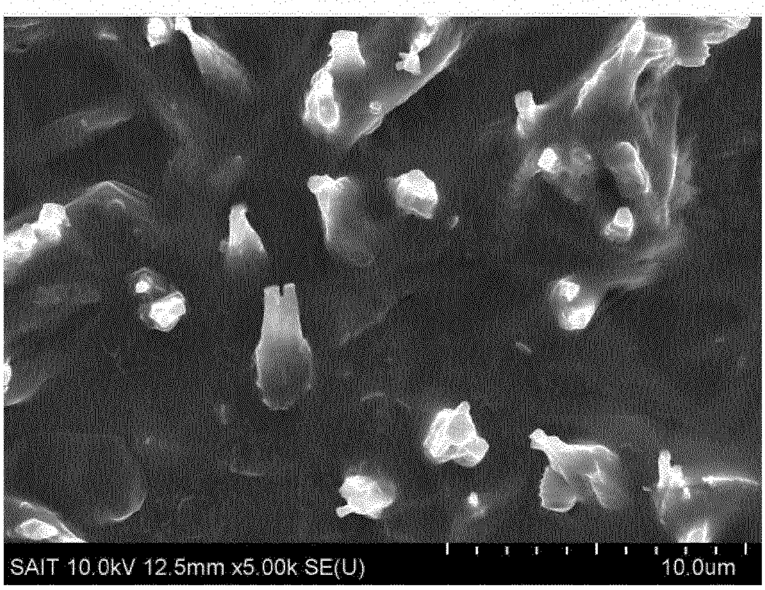
SAIT 10.0kV 12.5mm x5.00k SE(U)
10.0um

FIG. 7

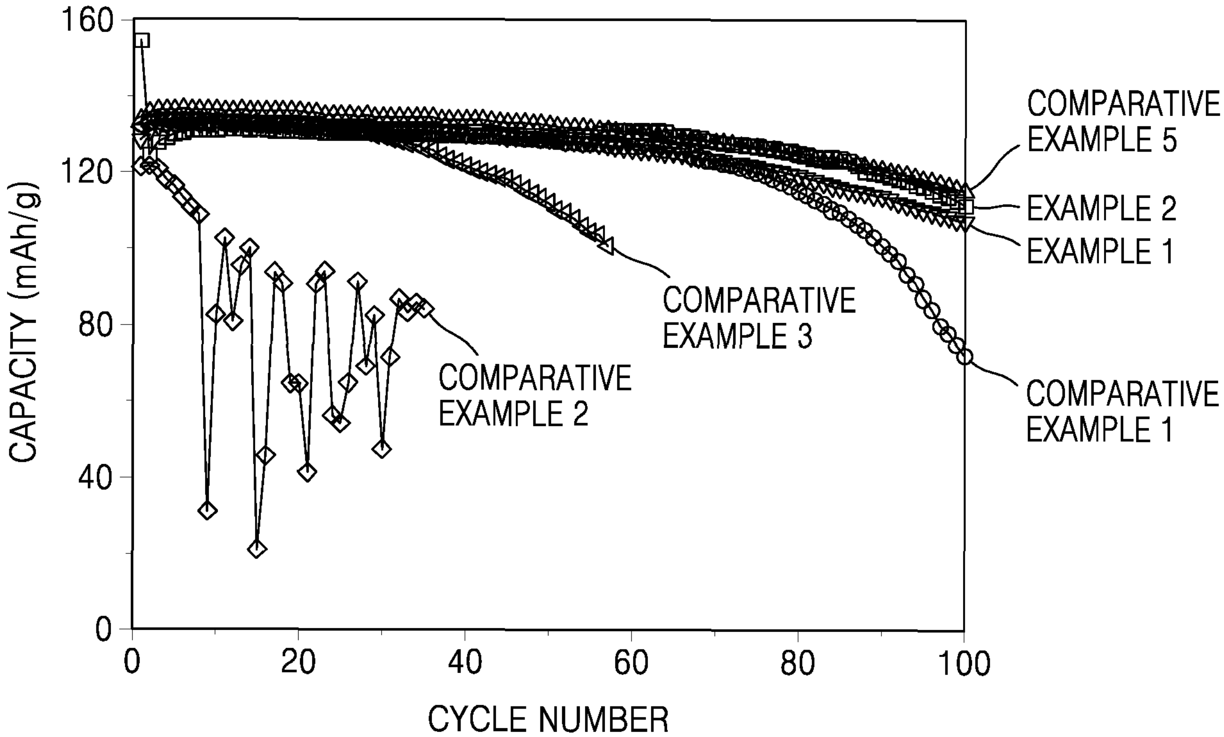
160
120
80
40
0
CAPACITY (mAh/g)
0
20
40
60
80
100
CYCLE NUMBER
COMPARATIVE EXAMPLE 5
EXAMPLE 2
EXAMPLE 1
COMPARATIVE EXAMPLE 3
COMPARATIVE EXAMPLE 2
COMPARATIVE EXAMPLE 1

# FIG. 8

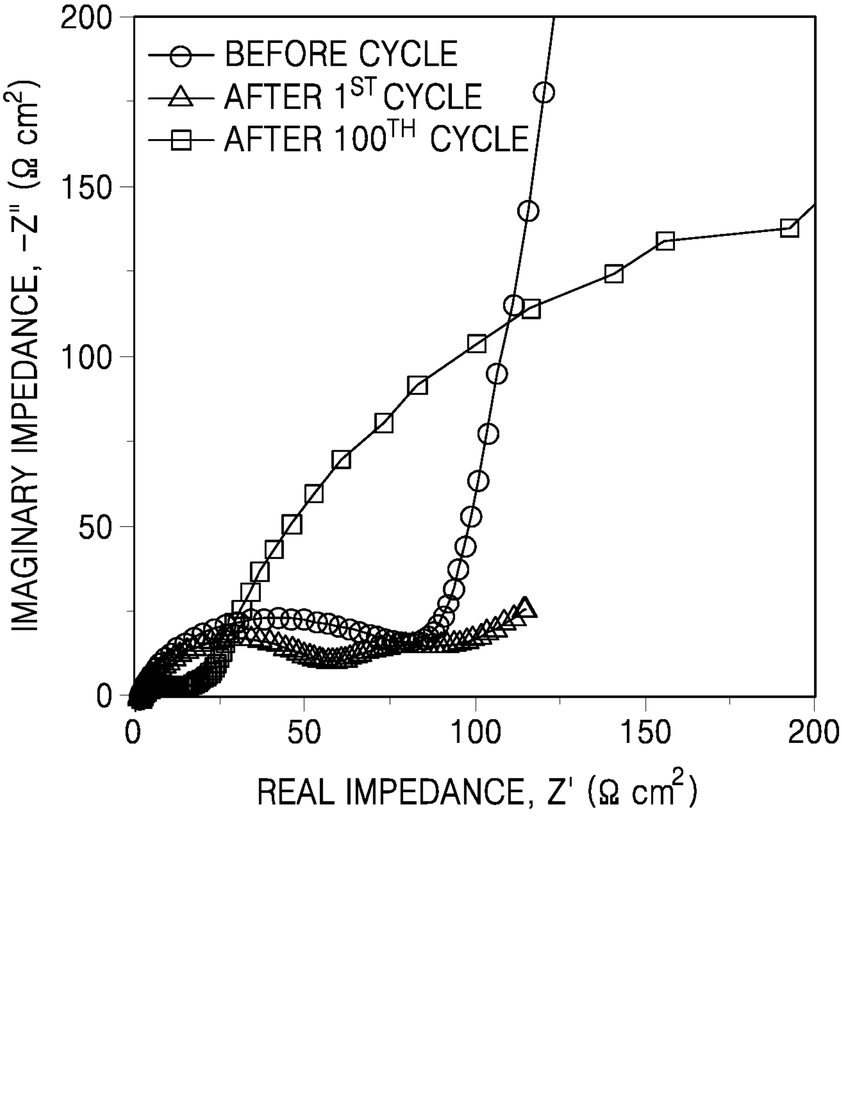
BEFORE CYCLE
AFTER 1ST CYCLE
AFTER 100TH CYCLE
IMAGINARY IMPEDANCE, −Z" (Ω cm2)
REAL IMPEDANCE, Z' (Ω cm2)
0
50
100
150
200

FIG. 9

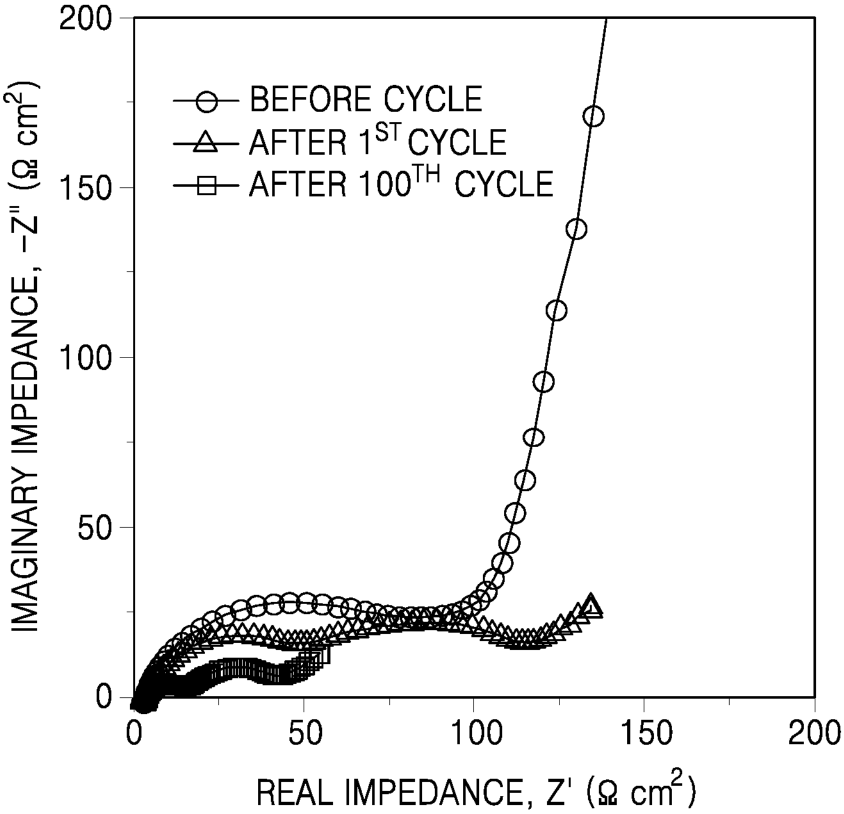
BEFORE CYCLE
AFTER 1ST CYCLE
AFTER 100TH CYCLE
IMAGINARY IMPEDANCE, −Z'' (Ω cm2)
REAL IMPEDANCE, Z' (Ω cm2)
0
50
100
150
200

FIG. 10

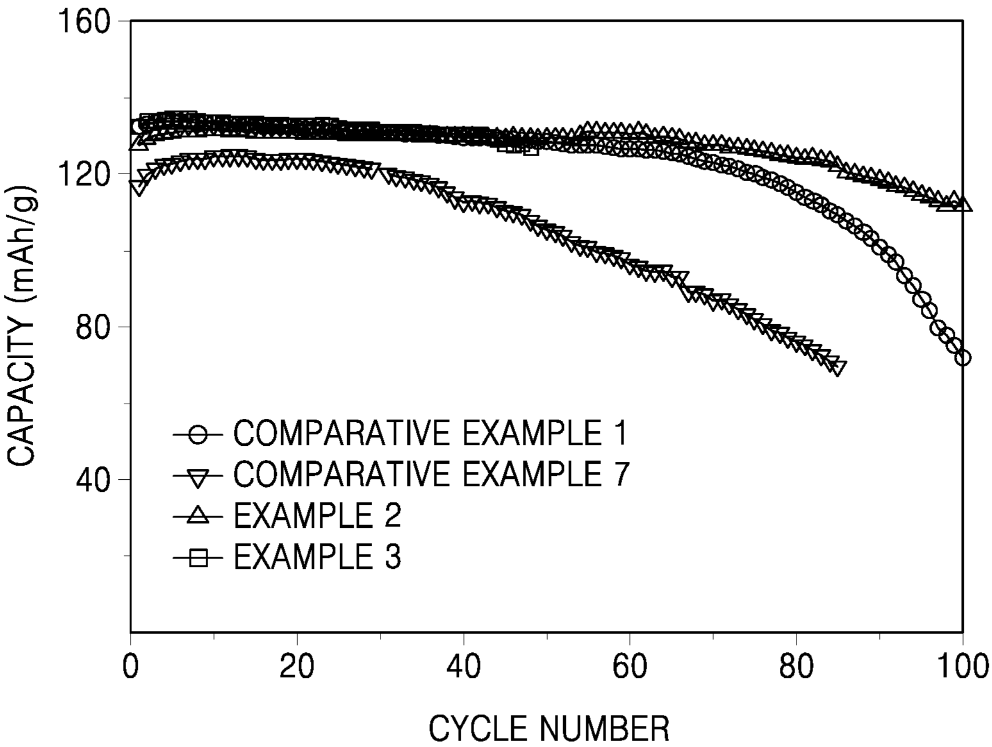
160
120
80
40
CAPACITY (mAh/g)
0
20
40
60
80
100
CYCLE NUMBER
COMPARATIVE EXAMPLE 1
COMPARATIVE EXAMPLE 7
EXAMPLE 2
EXAMPLE 3

# FIG. 11

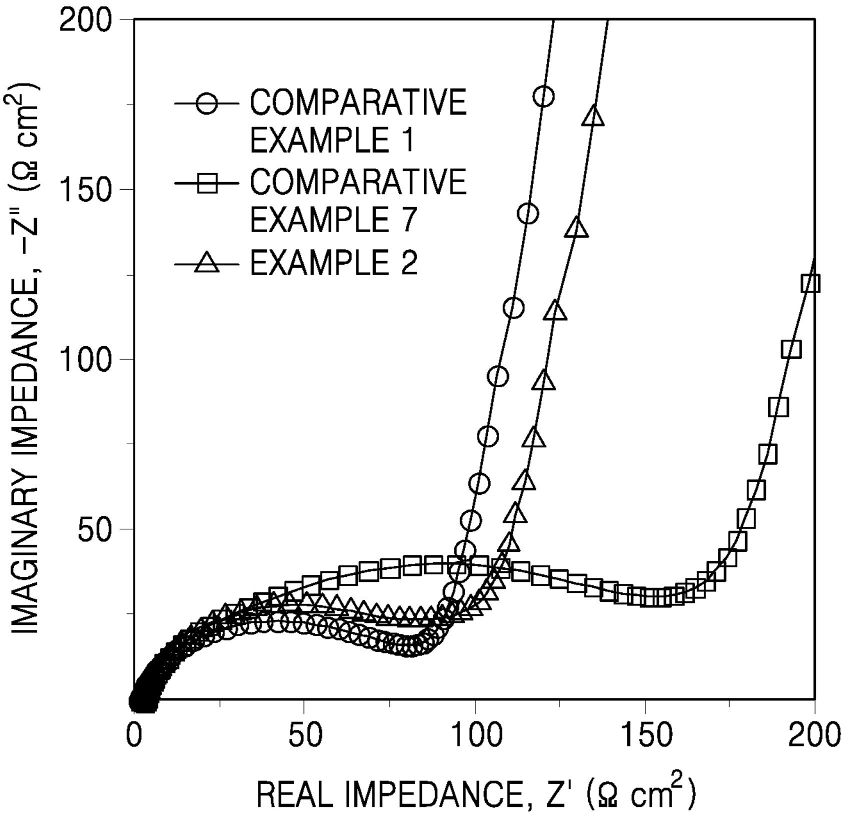
COMPARATIVE EXAMPLE 1
COMPARATIVE EXAMPLE 7
EXAMPLE 2
IMAGINARY IMPEDANCE, −Z" (Ω cm2)
REAL IMPEDANCE, Z' (Ω cm2)
0
50
100
150
200

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014133466 A1
- WO 2015065539 A2
- US 2013236764 A1
- WO 2012145796 A1
- US 2009286163 A1
- JP 2005229103 A
- US 2007243463 A1
- US 2006210873 A1
- US 2013092866 A1